# EUROPÄISCHE PATENTSCHRIFT

(11) **EP 3 720 885 B1**
(45) Veröffentlichungstag und Bekanntmachung des Hinweises auf die Patenterteilung: **01.12.2021**
(21) Anmeldenummer: 18811279.1
(22) Anmeldetag: 05.12.2018
(51) Int. Cl.: C08C 19/08, B01J 31/22

(54) **VERFAHREN ZUR HERSTELLUNG VON NITRILKAUTSCHUKEN MIT RUTHENIUM-KOMPLEXKATALYSATOREN**
METHOD FOR PRODUCING NITRILE RUBBERS WITH RUTHENIUM COMPLEX CATALYSTS
PROCÉDÉ DE FABRICATION DE CAOUTCHOUC DE NITRILE AU MOYEN DES CATALYSEURS COMPLEXES DE RUTHÉNIUM

(30) Priorität: 08.12.2017 EP 17206071
(43) Veröffentlichungstag der Anmeldung: 14.10.2020
(73) Patentinhaber: ARLANXEO Deutschland GmbH, 41540 Dormagen (DE)
(72) Erfinder: OBRECHT, Werner, 47447 Moers (DE); DAVID, Sarah, 41539 Dormagen (DE); SALEM, Hiyam, 50733 Köln (DE)
(86) Internationale Anmeldenummer: PCT/EP2018/083643
(87) Internationale Veröffentlichungsnummer: WO 2019/110658

(56) Entgegenhaltungen:
- EP-A1- 1 543 875
- EP-A1- 2 418 225
- EP-A2- 1 826 220
- WO-A1-2016/058062

## Beschreibung

Die vorliegende Erfindung betrifft ein **Verfahren** zur Herstellung von Nitrilkautschuken mit verringertem Molekulargewicht durch Metathese eines ersten Nitrilkautschuks in Gegenwart spezieller **Ruthenium-Komplexkatalysatoren**, die besondere N-heterocyclische Carben-Liganden und besondere verbrückte Carben-Liganden mit mindestens einem elektronenziehenden Rest aufweisen.

Metathese-Reaktionen werden umfangreich im Rahmen chemischer Synthesen eingesetzt, z. B. in Form von Ringschlussmetathesen (RCM), Kreuzmetathesen (CM), Ringöffnungsmetathesen (ROM), ringöffnenden Metathesepolymerisationen (ROMP), cyclischen Dien Metathese-Polymerisationen (ADMET), Selbstmetathesen, Umsetzung von Alkenen mit Alkinen (enin-Reaktionen), Polymerisation von Alkinen und Olefinierung von Carbonylen. Anwendung finden Metathese-Reaktionen beispielsweise zur Olefin-Synthese, zur ringöffnenden Polymerisation von Norbornenderivaten, zur Depolymerisation ungesättigter Polymere und zur Synthese von Telechelen.

Für die Katalyse dieser Reaktionen stehen unterschiedlichste Katalysatoren auf der Basis von Titan, Wolfram, Molybdän, Ruthenium und Osmium zur Verfügung, die in der Literatur beschrieben wurden, beispielsweise von Katz **(**Tetrahedron Lett. 47, 4247-4250 (1976**)),** Bassett (Angew. Chem. Int. Ed. 31, 628-631 (1992**)),** Schrock (J. Am. Chem. Soc. 108, 2271-2273 (1986**);** Catal. 46, 243-253 (1988**);** Organometallics 9, 2262-2275 (1990**)),** Grubbs (WO-A-00/71554**;** WO-A-2007/08198**;** WO-A-03/011455**),** Herrmann (Angew.Chem.Int.Ed. 37, 2490-2493 (1998**)),** Hoveyda (US-A-2002/0107138**),** Hill-Fürstner (J. Chem. Soc. Dalton Trans. 1999, 285-291**;** Chem. Eur. J 2001, 7, No.22, 4811-4820**),** Fogg (Organometallics 2003, 22, 3634**),** Buchmeiser-Nuyken (Macromol. Symp. 2004, 217, 179-190**;** Chem. Eur. J. 2004, 10, 777-784**),** Nolan (WO-A-00/15339**),** Dixneuf (WO 1999/28330**),** Mol (J. C. Adv. Synth. Catal. 2002, 344, 671-677**),** Wagener (Macromolecules 2003, 36, 8231,8239**),** Piers (WO-A-2005/121158**),** Grela (WO-A-2004/035596**),** Barbasiewicz (Organometallics 2012, 31, 3171-3177**),** Mauduit (WO-A-2008/065187**),** Arlt (WO-A-2008/034552**),** Berke (EP-A-2027920**),** Zhan (US-A-2007/0043180**,** WO-A-2011/079439**)** sowie von der Ciba Special Chemicals **(**EP-A-0993465**;** EP-A-0839821**)** und Böhringer Ingelheim (Org. Process Res. Dev. 2005, 9, 513**;** J. Org. Chem. 2006, 71 7133**).**

Die beschriebenen Katalysatoren sind für die verschiedenen zuvor genannten Metathesereaktionen **unterschiedlich gut geeignet.** Für die Katalyse von Metathese-Reaktionen von Substraten mit **polaren Gruppen,** insbesondere von Nitrilgruppen, sind die o.g. Katalysatoren nicht zwangsläufig geeignet, da nur die wenigsten Metathesekatalysatoren polare Gruppen tolerieren. Bei der Metathese von Nitrilkautschuk wird die Auswahl geeigneter Katalysatoren dadurch weiter eingeschränkt, dass im Nitrilkautschuk, der großtechnisch durch Emulsionspolymerisation hergestellt wird, neben den Nitrilgruppen verfahrensspezifische Verunreinigungen wie beispielsweise Initiatoren, Redoxsysteme, Kettenüberträger, Fettsäuren oder Antioxidantien enthalten sind, die als **Katalysatorgifte** wirken. Eine weitere Schwierigkeit bzw. Gefahr besteht darin, dass Nitrilkautschuk **leicht vergelt,** wobei das Polymer unlöslich wird und die Anwendungsgebiete dadurch beschränkt werden. Des Weiteren lässt sich das Polymer nicht mehr gut mischen und es kommt zu Fehlstellen im Endprodukt.

Katalysatoren, die sich für die Metathese von Nitrilkautschuk **prinzipiell** eignen und die obengenannten Kriterien unterschiedlich gut erfüllen, sind beispielsweise beschrieben in EP-A-1826220**,** WO-A-2008/034552**,** EP-A-2027920**,** EP-A-2028194**,** EP-A-2289622 und EP-A-2289623 sowie WO-A-2011/079799.

In EP-A-1826220 werden Übergangsmetall-Carben-Komplexkatalysatoren vom Grubbs-Hoveyda-II-Typ für die Metathese von Nitrilkautschuk eingesetzt, welche die folgende allgemeine Struktur (I) aufweisen, 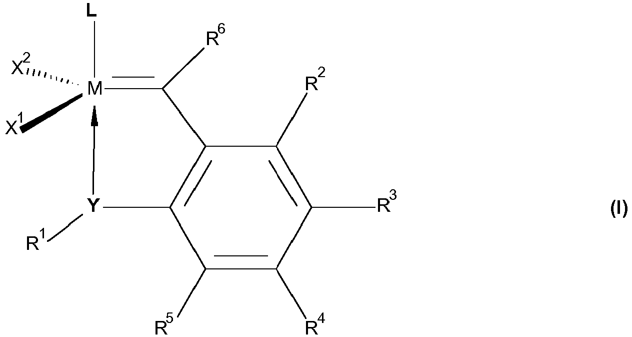 worin
- M: Ruthenium oder Osmium bedeutet,
- Y: Sauerstoff (O), Schwefel (S), einen Rest N-R¹ oder einen Rest P-R¹ bedeutet, wobei R¹ die nachfolgend genannten Bedeutungen besitzt,
- X¹ und X²: gleiche oder verschiedene Liganden darstellen,
- R¹: einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
- R², R³, R⁴ und R⁵: gleich oder verschieden sind und Wasserstoff, organische oder anorganische Reste darstellen,
- R⁶: Wasserstoff, einen Alkyl-, Alkenyl-, Alkinyl- oder einen Aryl-Rest bedeutet und
- L: ein Ligand ist.

In den Katalysatoren der allgemeinen Formel (I) steht L für einen Liganden, üblicherweise einen Liganden mit Elektronen-Donor-Funktion. L kann einen P(R⁷)₃ Rest darstellen, wobei R⁷ unabhängig voneinander C₁-C₆-Alkyl, C₃-C₈-Cycloalkyl oder Aryl bedeuten, oder aber einen gegebenenfalls substituierten Imidazolidinrest ("Im").

Der Imidazolidinrest (Im) weist dabei üblicherweise eine Struktur der allgemeinen Formeln (IIa) oder (IIb) auf, 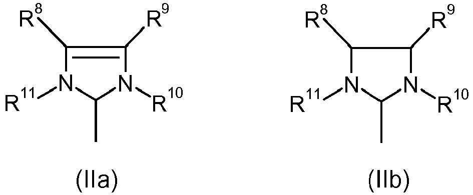 worin
- R⁸, R⁹, R¹⁰, R¹¹: gleich oder verschieden sind und Wasserstoff, geradkettiges oder verzweigtes C₁-C₃₀-Alkyl, bevorzugt C₁-C₂₀-Alkyl, C₃-C₂₀-Cycloalkyl, bevorzugt C₃-C₁₀-Cycloalkyl, C₂-C₂₀-Alkenyl, bevorzugt C₂-C₁₀-Alkenyl, C₂-C₂₀-Alkinyl, bevorzugt C₂-C₁₀-Alkinyl, C₆-C₂₄-Aryl, bevorzugt C₆-C₁₄-Aryl, C₁-C₂₀-Carboxylat, bevorzugt C₁-C₁₀-Carboxylat, C₁-C₂₀-Alkoxy, bevorzugt C₁-C₁₀-Alkoxy, C₂-C₂₀-Alkenyloxy, bevorzugt C₂-C₁₀-Alkenyloxy, C₂-C₂₀-Alkinyloxy, bevorzugt C₂-C₁₀-Alkinyloxy, C₆-C₂₀-Aryloxy, bevorzugt C₆-C₁₄-Aryloxy, C₂-C₂₀-Alkoxycarbonyl, bevorzugt C₂-C₁₀-Alkoxycarbonyl, C₁-C₂₀-Alkylthio, bevorzugt C₁-C₁₀-Alkylthio, C₆-C₂₀-Arylthio, bevorzugt C₆-C₁₄-Arylthio, C₁-C₂₀-Alkylsulfonyl, bevorzugt C₁-C₁₀-Alkylsulfonyl, C₁-C₂₀-Alkylsulfonat, bevorzugt C₁-C₁₀-Alkylsulfonat, C₆-C₂₀-Arylsulfonat, bevorzugt C₆-C₁₄-Arylsulfonat, und C₁-C₂₀-Alkylsulfinyl, bevorzugt C₁-C₁₀-Alkylsulfinyl bedeuten.

Besonders bevorzugte Imidazolidinreste (Im) haben die nachfolgenden Strukturen (IIIa-f), wobei Mes jeweils für einen 2,4,6-Trimethylphenyl-Rest steht,

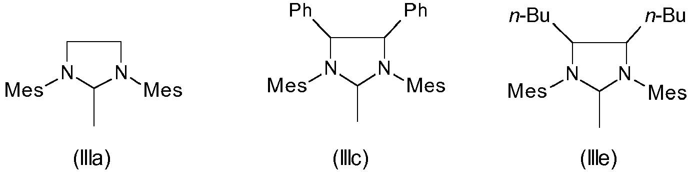

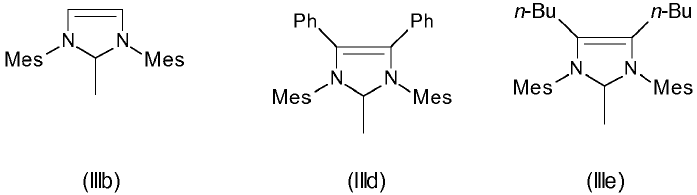

Explizit beschriebene Katalysatoren sind diejenigen der folgenden Struktur, wobei Mes jeweils für 2,4,6-trimethylphenyl steht:

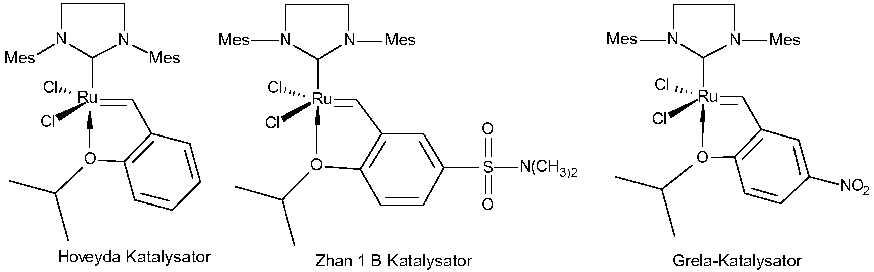

Mit den Katalysatoren des **Hoveyda-Typs** wird die Kreuzmetathese von Nitrilkautschuk in Gegenwart von 1-Olefinen bei Ru-Einsätzen im Bereich von 8,6 ppm bis 161 ppm bezogen auf Nitrilkautschuk ermöglicht. Im Bereich von Ru-Einsätzen von 8,6 und 23,8 ppm weisen der Hoveyda- und der Grela-Katalysator höhere Aktivitäten als der Grubbs-II-Katalysator (G II) bei jeweils derselben Ru-Dosierung auf. Der Lehre von EP-A-1826220 ist nicht zu entnehmen, **welche Strukturmerkmale** Katalysatoren aufweisen müssen, damit ihre Effizienz bei der Metathese von Nitrilkautschuk **weiter verbessert** werden kann. Insbesondere fehlen Hinweise zum Design des NHC-Substituenten und des aromatischen Carben-Liganden.

In EP-A-2028194 werden Katalysatoren mit folgenden allgemeinen Strukturmerkmalen beschrieben 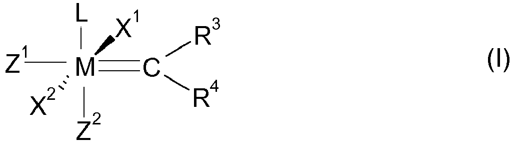 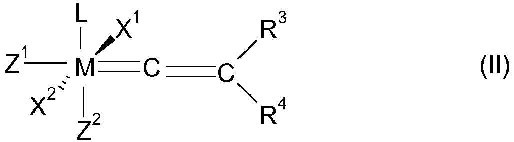 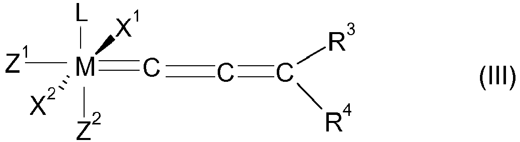 wobei folgende Katalysatoren explizit erwähnt werden:

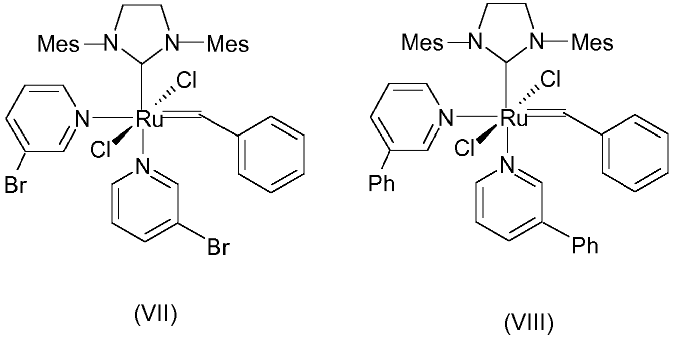

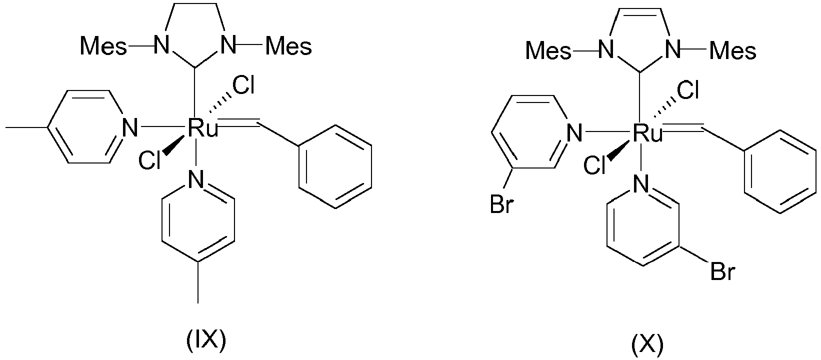

Diese Katalysatoren weisen bei vergleichbaren Ru-Dosierungen eine höhere Aktivität als der Grubbs-II-Katalysator auf.

Nachteil der in EP-A-2028194 für die Metathese von Nitrilkautschuk beschriebenen Katalysatoren ist, dass die Katalysatoraktivitäten für eine kommerzielle Nutzung zu niedrig sind.

In EP-A-2027920 werden Übergangsmetall-Carben-Komplexkatalysatoren mit folgenden Strukturmerkmalen beschrieben, 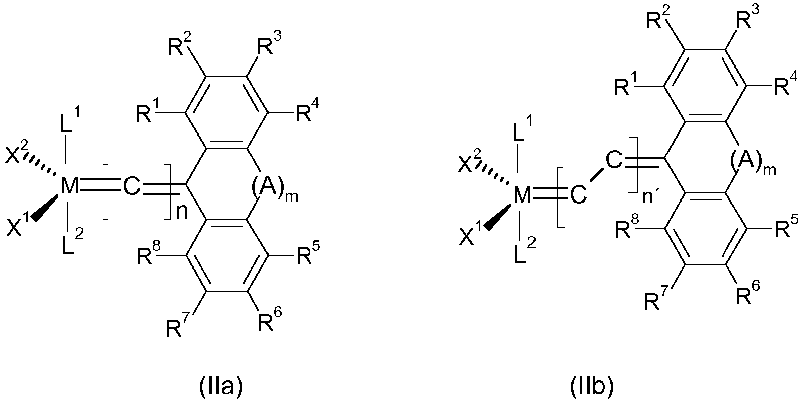 wobei folgende Flurenyliden-Komplexkatalysatoren explizit erwähnt werden:

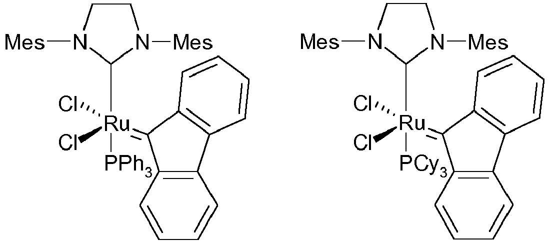

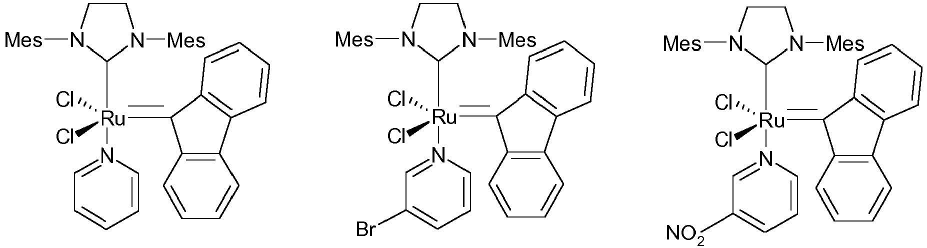

Die Fluorenylidenkomplexe haben ein breites Einsatzspektrum und können für die unterschiedlichsten Metathesereaktionen inklusive des Nitrilkautschukabbaus eingesetzt werden. Für die Metathese von Nitrilkautschuken ist ihre Aktivität allerdings nicht ausreichend.

Der in WO-A-2008/034552 beschriebene Arlt-Katalysator wird in EP-A-2289622 für die Metathese von Nitrilkautschuk eingesetzt

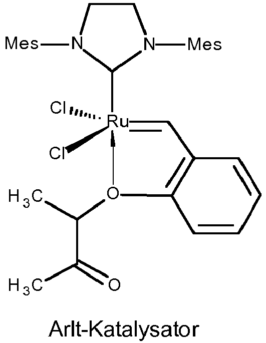

In EP-A-2289622 und EP-A-2289623 wird der Arlt-Katalysator bei drei Mengendosierungen von 0,003 phr, 0,007 phr und 0,15 phr mit dem Grubbs-II-Katalysator verglichen. Bei den 6 Versuchen wird der Nitrilkautschukabbau als Kreuzmetathese in Gegenwart von 4 phr 1-Hexen durchgeführt. Im Vergleich mit dem Grubbs-II-Katalysator werden mit dem Arlt-Katalysator niedrigere Molmassen (M_{w} und Mₙ) als mit dem Grubbs-II-Katalysator erhalten. In EP-A-2289622 wird die Aktivität des Arlt-Katalysators nicht mit der des Grubbs-Hoveyda-II-Katalysators (GH II) verglichen, von dem aus EP-A-1826220 bekannt ist, dass er eine höhere Aktivität als der Grubbs-II-Katalysator aufweist. Ferner kann der Lehre von EP-A-2289622 nicht entnommen werden, wie die chemische Struktur eines Metathesekatalysators zu variieren ist, damit er bei der Nitrilkautschukmetathese eine höhere Aktivitäten als der Grubbs-Hoveyda-Katalysator aufweist.

In WO-A-2011/079799 werden zahlreiche Katalysatoren mit 1-zähnigem N- sowie zweizähnigem N- und O-haltigen Ligandensystemen beschrieben, wobei die Liganden jeweils in o-Position des Aromaten am Kohlenstoffcarben gebunden sind. Die Verwendung dieser Katalysatoren wird für die Durchführung von RCM und ROMP beschrieben, wobei allerdings Vergleiche mit bekannten Katalysatoren fehlen, so dass eine **relative Beurteilung** der Katalysatoraktivitäten **nicht möglich** ist. Des Weiteren werden die Metathese und die Hydrierung doppelbindungshaltiger Kautschuke wie Nitrilkautschuk (NBR), Styrol/Butadien-Kautschuk (SBR und SBS) und Butylkautschuk (IIR) erwähnt, wobei Metathese und Hydrierung sowohl sequentiell als auch gleichzeitig durchgeführt werden können. Für die Metathese von kommerziell erhältlichem Nitrilkautschuk sowie für die simultane Metathese und Hydrierung sind Beispiele offenbart. Die Metathese wird ohne Einsatz von 1-Olefinen im Temperaturbereich von 30°C bis 100°C in Chloroform oder Chlorbenzol durchgeführt, wobei 0,04 Gew.-%, 0,07 Gew.-% und 0,1 Gew.% des Katalysators 4aa eingesetzt werden. Die simultane Metathese und Hydrierung wird unter Verwendung des Katalysators 4ab bei denselben Katalysatormengen durchgeführt.

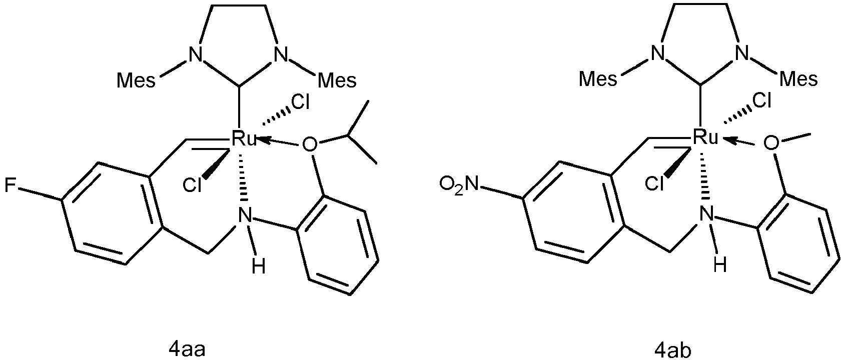

Auf der Basis der Angaben von WO-A-2011/079799 können **keine Vorhersagen zur Optimierung des Ligandensystems im Hinblick auf Metathesereaktionen** und insbesondere auf die Metathese von Nitrilkautschuken gemacht werden.

Die in den oben genannten Patentschriften für die Metathese beschriebenen Katalysatoren sind gegenüber Nitrilkautschuken und den im Nitrilkautschuk enthaltenen Verunreinigungen tolerant. Allerdings ist die Aktivität dieser Katalysatoren unter wirtschaftlichen Gesichtspunkten nicht ausreichend.

In WO-A-2008/065187 werden substituierte Katalysatoren des Grubbs-Hoveyda-II-Typs mit folgenden Strukturmerkmalen (im folgenden "Mauduit-Katalysatoren" genannt) beschrieben: 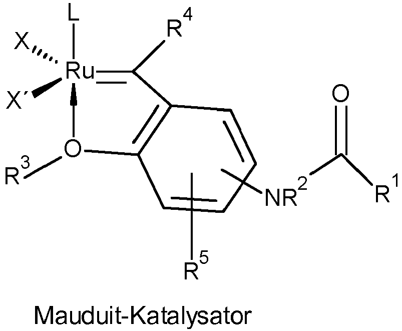 worin
- L: ein neutraler Ligand ist
- X und X': anionische Liganden darstellen
- R¹ und R²: sind unabhängig voneinander, H, C₁-C₆-Alkyl, perhalogeniertes C₁-C₆-Alkyl, ein Aldehyd, Keton, Ester, Amid, Nitril, gegebenenfalls substituiertes Aryl, Pyridinium-Alkyl, Pyridinium-perhalogenoalkyl oder gegebenenfalls substituiertes C₅-C₆ Cyclohexyl, ein Rest CₙH₂ₙY oder CₙF₂ₙY mit n = 1 bis 6 und Y eine ionische Gruppe oder ein Rest einer der Formeln

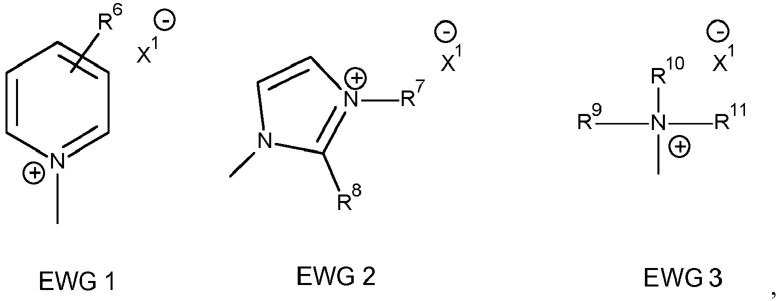

- R³: ist C₁-C₆-Alkyl oder C₅-C₆-Cycloalkyl oder C₅-C₆-Aryl,
- R⁴, R⁵, R⁶, R⁷, R⁸, R⁹, R¹⁰, R¹¹: sind unabhängig voneinander H, C₁-C₆-Alkyl, C₁-C₆-Perhalogenalkyl oder C₅-C₆-Aryl,
- R⁹, R¹⁰, R¹¹: können einen Heterozyklus bilden,
- X¹: ist ein Anion, Halogen, Tetrafluorborat ([BF₄]⁻), [Tetrakis-(3,5-bis-(Trifluormethyl)-phenyl)borat]([BARF]⁻), Hexafluorphosphat ([PF₆]⁻), Hexafluorantimonat ([SbF₆]⁻), Hexafluorarsenat ([AsF₆]⁻), Trifluormethylsulfonat ([(CF₃)₂N]⁻);

R¹ und R² können mit dem N und dem C an welches sie gebunden sind einen Heterozyklus der Formel 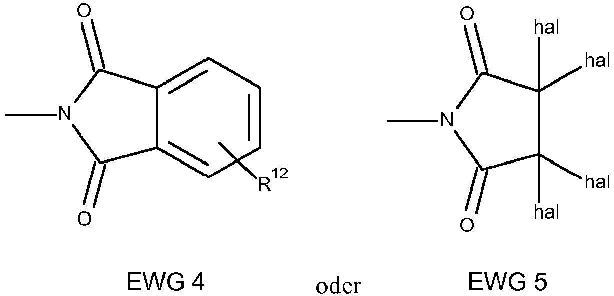 bilden, wobei
hal ist Halogen und R¹² ist Wasserstoff, C₁-C₆-Alkyl, C₅-C₆-Cycloalkyl oder C₁-C₆-Cycloaryl.

In einer bevorzugten Ausführungsform ist L P(R¹³)₃, wobei R¹³ C₁-C₆-Alkyl, C₅-C₆-Aryl oder C₅-C₆-Cycloalkyl ist.

L ist in einer alternativen bevorzugten Ausführungsform ein Ligand der Formel 7a, 7b, 7c, 7d oder 7e: 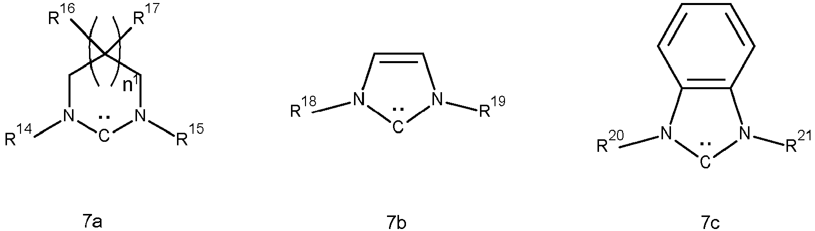 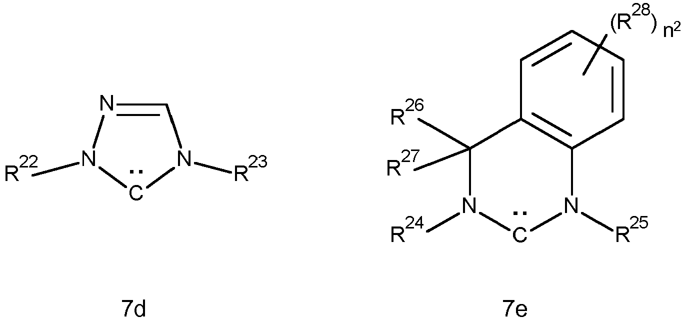
wobei n¹=0, 1, 2, 3;
R¹⁴ , R¹⁵ , R¹⁶ , R¹⁷ , R¹⁸ , R¹⁹ , R²⁰ , R²¹ , R²², R²³ , R²⁴ , R²⁵ , R²⁶ , R²⁷ , R²⁸ sind unabhängig voneinander C₁-C₆-Alkyl, C₃-C₂₀-Cycloalkyl, C₂-C₂₀-Alkenyl, Naphthyl, Anthracen oder Phenyl, wobei das Phenyl optional mit bis zu 5 Gruppen ausgewählt aus einer Gruppe umfassend C₁-C₆-Alkyl, C₁-C₆-Alkoxy und Halogen, substituiert sein kann,
R¹⁶ und R¹⁷ , sowie R²⁶ und R²⁷können einen Ring bilden mit 3, 4, 5, 6 oder 7 Verbindungen,
R²⁸ kann unabhängig einen aromatischen Ring mit 6 Verbindungen bilden.
Ausgewählte Mauduit-Katalysatoren sind beispielsweise

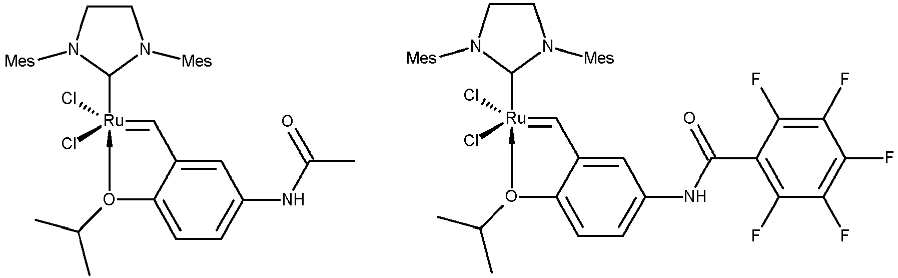

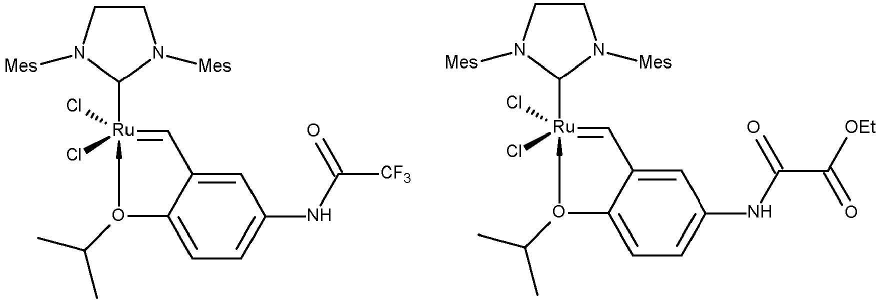

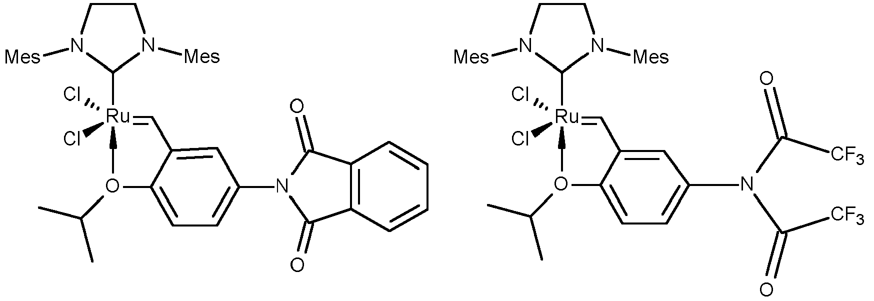

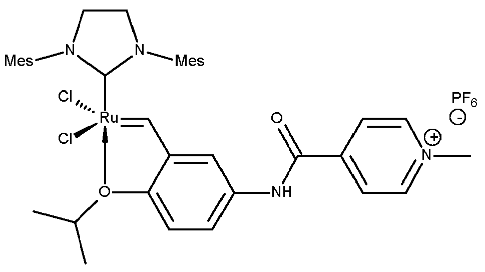

Die Mauduit-Katalysatoren zeichnen sich durch leichte Recyclierbarkeit aus, wodurch die Herstellung von Metatheseprodukten mit niedrigen Edelmetallgehalten ermöglicht wird. Günstigstenfalls ermöglichen die Mauduit-Katalysatoren die Herstellung von Produkten mit Rutheniumgehalten unter 10 ppm bis 20 ppm.

Laut WO-A-2008/065187 eigenen sich die darin beschriebenen Katalysatoren für eine Reihe von Metathesereaktionen, wobei die **Metathese von Nitrilkautschuk nicht erwähnt** wird. Des Weiteren **fehlen** in WO-A-2008/065187 **Hinweise zur Optimierung** der Katalysatorstruktur, insbesondere der Struktur des NHC-Liganden, für eine Reduktion der Katalysatormenge bei der Metathese von Nitrilkautschuk. Ebenso enthält die WO-A-2008/065187 keinen Hinweis darauf, ob die Metathesereaktion von Nitrilkautschuken durch Zugabe von Zusätzen gesteigert werden kann.

Weiterhin werden in der Patentliteratur eine Reihe von **Zusätzen** beschrieben, mit denen die Aktivität von Metathesekatalysatoren insbesondere für die Metathese von Nitrilkautschuk gesteigert werden kann **(**EP-A-1760093**,** EP-A-1894946**,** EP-A-2027919**,** EP-A-2028194**,** EP-A-2030988**,** EP-A-2143489**,** EP-A-2147721**).**

In diesen Patentschriften wird für die Aktivitätssteigerung die Verwendung von Salzen wie Lithiumchlorid, Lithiumbromid, Magnesiumchlorid, Calciumchlorid etc. sowie von Verbindungen wie Borsäureester, Bortrifluorid-Etheraddukte, Übergangsmetallester wie Tetraalkoxytitanate etc. genannt. Diesen Patentschriften kann jedoch nicht entnommen werden, welche Strukturmerkmale der Ruthenium- oder Osmiumhaltige Übergansmetallkomplex aufweisen muss, damit er bei der Metathese von Nitrilkautschuk besonders hohe Aktivitäten aufweist.

**Aufgabe der vorliegenden Erfindung** war es daher, ein Verfahren für die Metathese von Nitrilkautschuken, insbesondere kommerziell erhältlichen Nitrilkautschuken, auf Basis von Katalysatoren bereitzustellen, die höhere Aktivitäten als die bekannten Katalysatoren, insbesondere die des Grubbs-II, Grubbs-III oder Grubbs-Hoveyda-II-Typs, aufweisen, und die einen Molekulargewichtsabbau weitestgehend ohne Gelbildung und ohne Erhöhung des PDI ermöglichen.

**Es wurde überraschend gefunden,** dass Ruthenium-Komplexkatalysatoren mit einem verbrückten Carbenliganden mit mindestens einem elektronenziehenden Rest (engl.: "electron withdrawing group", EWG) die gewünschten Anforderungen in hervorragender Weise erfüllen, wenn diese Ruthenium-Komplexkatalysatoren zusätzlich einen NHC-Liganden enthalten, der mit zwei Phenylringen substituiert ist, die jeweils in o und o'-Position sterisch anspruchsvolle Substituenten aufweisen.

Die Aufgabe der vorliegenden Erfindung kann somit gelöst werden durch ein Verfahren zum Molekulargewichtsabbau von Nitrilkautschuk wobei in einer Metathesereaktion Nitrilkautschuk in Kontakt gebracht wird mit einer Ruthenium-Komplexkatalysator der allgemeinen Formel (IA) 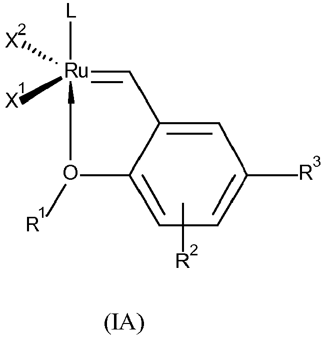 wobei
- **X¹ und X²**: gleiche oder unterschiedliche anionische Liganden darstellen, bevorzugt Halogen, weiter bevorzugt F, Cl, Br, I und besonders bevorzugt Cl,
- **R¹**: ein linearer oder verzweigter, aliphatischer C₁-C₂₀-Alkyl, C₃-C₂₀-Cycloalkyl, C₅-C₂₀-Aryl, CHCH₃-CO-CH₃, bevorzugt Methyl, Ethyl, Isopropyl, Isoamyl, t-Butyl, CHCH₃-CO-CH₃, Cyclohexyl oder Phenyl darstellt,
- **R²**: Wasserstoff, Halogen, C₁-C₆-Alkyl oder C₁-C₆-Alkenyl darstellt,
- **R³**: einen elektronenziehenden Rest, bevorzugt, -F, -Cl, -Br, -I, -NO, -NO₂, -CF₃, -OCF₃,-CN, -SCN, -NCO, -CNO, -COCH₃, -COCF₃, -CO-C₂F₅, -SO₃, -SO₂-N(CH₃)₂, Arylsulfonyl, Arylsulfinyl, Arylcarbonyl, Alkylcarbonyl, Aryloxycarbonyl, oder-NR⁴-CO-R⁵ wobei R⁴ und R⁵ gleich oder verschieden sind und jeweils unabhängig voneinander stehen können für H, C₁-C₆-Alkyl, perhalogeniertes C₁-C₆-Alkyl, Aldehyd, Keton, Ester, Amid, Nitril, gegebenenfalls substituiertes Aryl, Pyridinium-Alkyl, Pyridinium-Perhalogenalkyl oder gegebenenfalls substituiertes C₅-C₆ Cyclohexyl, ein Rest CₙH₂ₙY oder CₙF₂ₙY mit n = 1 bis 6 und Y eine ionische Gruppe oder ein Rest einer der Formeln (EWG 1), (EWG 2) oder (EWG 3) 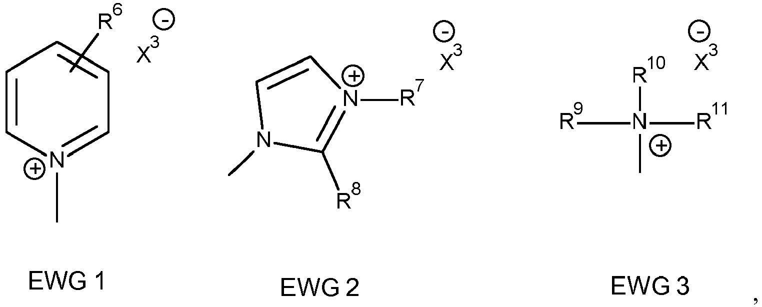
wobei
- R⁶, R⁷, R⁸, R⁹, R¹⁰, R¹¹: unabhängig voneinander H, C₁-C₆-Alkyl, C₁-C₆-Perhalogenalkyl oder C₅-C₆-Aryl darstellen und R⁹, R¹⁰, R¹¹ einen Heterozyklus bilden können,
- X³: ein Anion, Halogen, Tetrafluorborat ([BF₄]⁻), [Tetrakis-(3,5-bis-(Trifluormethyl)-phenyl)borat]([BARF]⁻), Hexafluorphosphat ([PF₆]⁻), Hexafluorantimonat ([SbF₆]⁻), Hexafluorarsenat ([AsF₆]⁻) oder Trifluormethylsulfonat ([(CF₃)₂N]⁻) darstellt;
- R⁴ und R⁵: können mit dem N und dem C an welches sie gebunden sind einen Heterozyklus der Formel (EWG 4) oder (EWG 5) 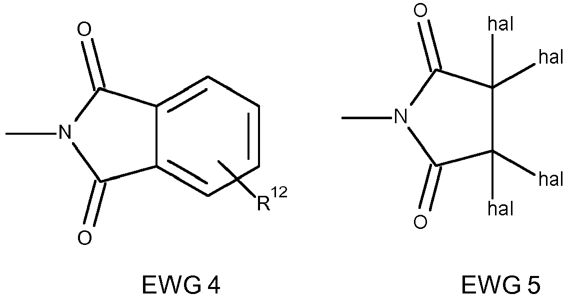
bilden, wobei
- hal: für Halogen und
- R¹²: für Wasserstoff, C₁-C₆-Alkyl, C₅-C₆-Cycloalkyl oder C₅-C₆-Cycloaryl steht,
- L: einen NHC-Liganden der allgemeinen Formel (L1) oder (L2) 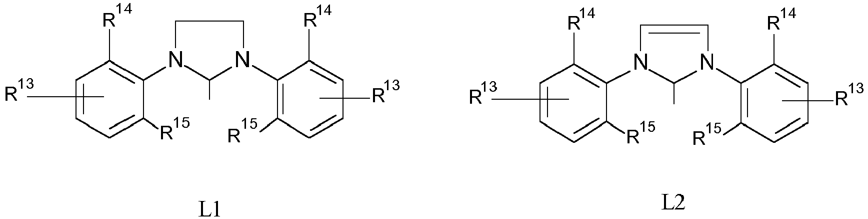
darstellt, wobei
- R¹³: für Wasserstoff, C₁-C₆-Alkyl, C₃-C₃₀-Cycloalkyl oder C₅-C₃₀-Aryl steht,
- R¹⁴ und R¹⁵: gleich oder verschieden sind und für linear oder verzweigtes C₃-C₃₀-Alkyl, C₃-C₃₀-Cycloalkyl, C₅-C₃₀-Aryl, C₅-C₃₀-Alkaryl, C₅-C₃₀-Aralkyl, mit gegebenenfalls bis zu 3 Heteroatomen, bevorzugt für Isopropyl, i-Butyl, tert-Butyl, Cyclohexyl oder Phenyl steht.

Es sei an dieser Stelle angemerkt, dass im Rahmen der Erfindung die vor- und nachstehend aufgeführten, allgemeinen oder in bevorzugten, weiter bevorzugten, besonders bevorzugten und ganz besonders bevorzugten Vorzugsbereichen aufgeführten Restedefinitionen bzw. Parameter auch in beliebigen Kombinationen untereinander umfasst sind.

**Bevorzugte** NHC-Liganden sind L1a, L2a, L1b, L2b, L1c, L2c, L1d, L2d, L1e und L2e

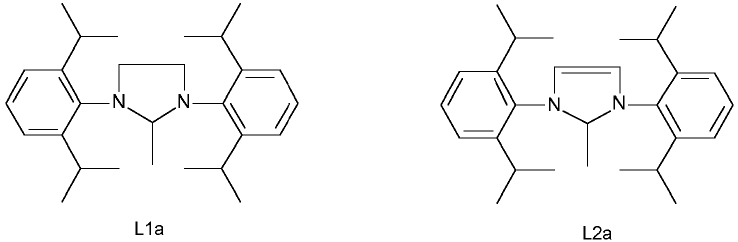

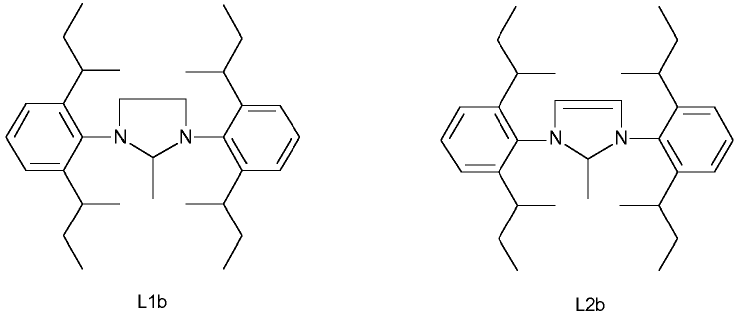

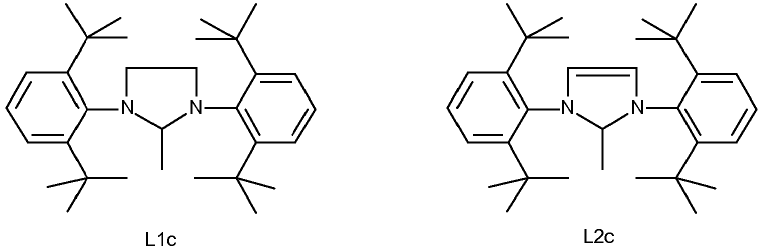

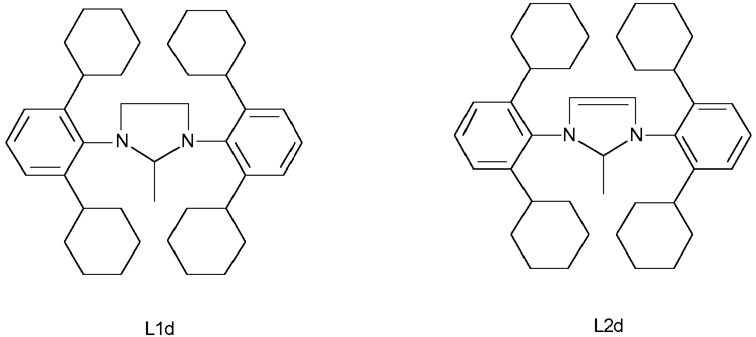

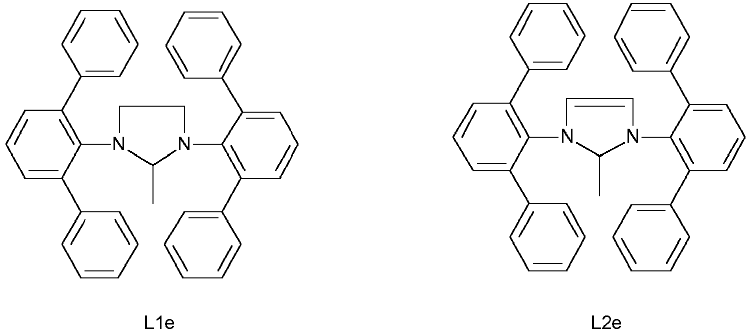

Weiter bevorzugte NHC-Liganden sind L1a, L2a, L1b, L2b, L1c oder L2c.

Besonders bevorzugte NHC-Liganden sind L1a oder L2a.

R³ ist bevorzugt -F, -Cl, -Br, -I, -NO, -NO₂, -CF₃, -OCF₃, -CN, -SCN, -NCO, -CNO, - COCH₃, -COCF₃, -CO-C₂F₅, -SO₃, -SO₂N(CH₃)₂, -NHCO-H, -NH-CO-CH₃, -NH-CO-CF₃, - NHCO-OEt, -NHCO-OiBu, -NH-CO-COOEt, -CO-NR₂, -NH-CO-C₆F₅, -NH(CO-CF₃)₂ darstellt,

**R³** ist weiter bevorzugt -Cl, -Br, -NO₂, -NH-CO-CF₃, -NH-CO-OiBu, -NH-CO-COOEt.

**R³** ist **besonders bevorzugt** -NH-CO-CF₃, -NH-CO-OiBu, NH-CO-COOEt

**Bevorzugte** Ruthenium-Komplexkatalysatoren sind

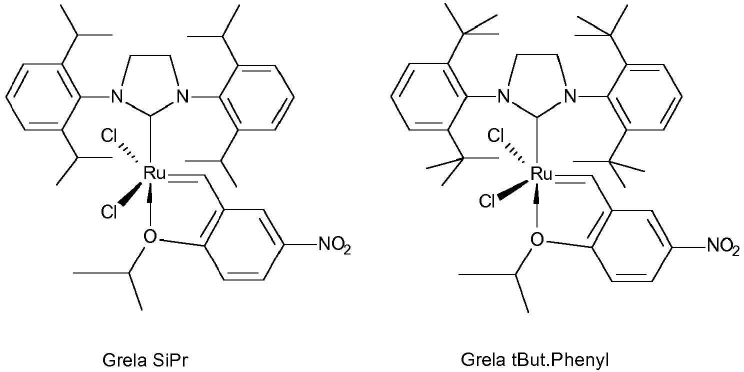

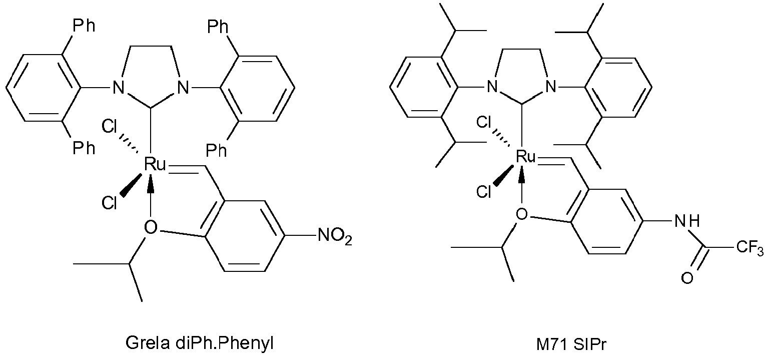

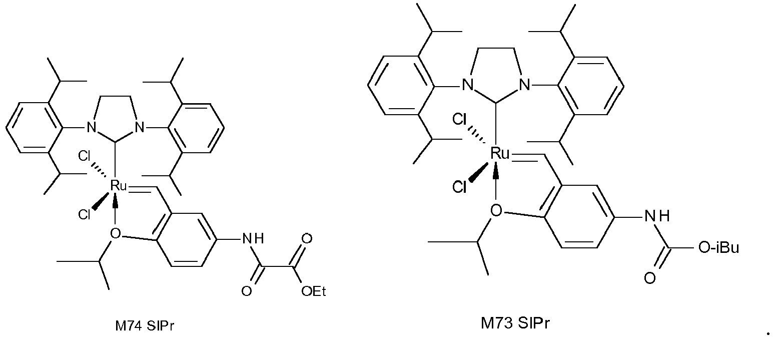

**Weiter bevorzugte** Ruthenium-Komplexkatalysatoren sind M71 SIPr, M73 SIPr und M74 SIPr.

Ein **besonders bevorzugter** Ruthenium-Komplexkatalysator ist M73 SIPr.

Die eingesetzte **Menge** des Ruthenium-Komplexkatalysators der allgemeinen Formel (IA) oder (IB) bezogen auf den eingesetzten Nitrilkautschuk in dem erfindungsgemäßen Molekulargewichtsabbau hängt von der Natur sowie katalytischen Aktivität des speziellen Ruthenium-Komplexkatalysators ab. Die Menge an eingesetztem Ruthenium-Komplexkatalysator beträgt üblicherweise 1 ppm bis 1.000 ppm Edelmetall, bevorzugt 2 ppm bis 500 ppm, insbesondere 5 ppm bis 250 ppm, bezogen auf den eingesetzten Nitrilkautschuk.

Die NBR-Metathese kann in Abwesenheit oder aber in Gegenwart eines **Co-Olefins** durchgeführt werden. Bei diesem Co-Olefin handelt es sich bevorzugt um ein geradkettiges oder verzweigtes C₂-C₁₆-Olefin. Geeignet sind beispielsweise Ethylen, Propylen, Isobuten, Styrol, 1-Dodecen, 1-Hexen oder 1-Octen. Bevorzugt wird 1-Hexen oder 1-Octen verwendet. Sofern das Co-Olefin flüssig ist (wie beispielsweise 1-Hexen), liegt die Menge des Co-Olefins bevorzugt in einem Bereich von 0,2 Gew.-% bis 20 Gew.% bezogen auf den eingesetzten Nitrilkautschuk. Sofern das Co-Olefin ein Gas ist, wie beispielsweise Ethylen, wird die Menge des Co-Olefins so gewählt, dass sich im Reaktionsgefäß bei Raumtemperatur ein Druck im Bereich von 1 x 10⁵ Pa bis 1 x 10⁷ Pa einstellt, bevorzugt ein Druck im Bereich von 5,2 x 10⁵ Pa bis 4 x 10⁶ Pa.

Die Metathese-Reaktion kann in einem geeigneten **Lösungsmittel** durchgeführt werden, welches den eingesetzten Katalysator nicht deaktiviert und die Reaktion auch nicht in irgendeiner anderen Weise negativ beeinflusst. Bevorzugte Lösungsmittel umfassen, sind aber nicht begrenzt auf, Dichlormethan, Benzol, Toluol, Methylethylketon, Aceton, Tetrahydrofuran, Tetrahydropyran, Dioxan, Cyclohexan und Monochlorbenzol. Das besonders bevorzugte Lösungsmittel ist Monochlorbenzol. In manchen Fällen, wenn das Co-Olefin selbst als Lösungsmittel fungieren kann, so z.B. bei 1-Hexen, kann auch auf den Zusatz eines weiteren zusätzlichen Lösungsmittels verzichtet werden.

Die **Konzentration** des eingesetzten Nitrilkautschuks in der Reaktionsmischung der Metathese ist nicht kritisch, aber es ist zu beachten, dass die Reaktion nicht durch eine viel zu hohe Viskosität der Reaktionsmischung und die damit verbundenen Mischungsprobleme negativ beeinflusst werden sollte. Bevorzugt liegt die Konzentration des NBR in der Reaktionsmischung im Bereich von 1 Gew.-% bis 30 Gew.%, besonders bevorzugt im Bereich von 5 Gew.-% bis 25 Gew.%, bezogen auf die gesamte Reaktionsmischung.

Der Metathese Abbau wird üblicherweise bei einer **Temperatur** im Bereich von 10°C bis 150°C durchgeführt, bevorzugt bei einer Temperatur im Bereich von 20°C bis 100°C.

Die **Reaktionszeit** hängt von einer Reihe von Faktoren ab, beispielsweise vom Typ des NBR, der Art des Katalysators, der verwendeten Katalysator-Konzentration und der Reaktionstemperatur. Typischerweise ist die Reaktion innerhalb von fünf Stunden unter normalen Bedingungen beendet.

Der Fortschritt der Metathese kann durch Standard-Analytik überwacht werden, z.B. durch Gelpermeationschromatographie-Messungen (GPC) oder durch Bestimmung der Viskosität.

Als **Nitrilkautschuke ("NBR")** können in dem erfindungsgemäßen Verfahren Co-, Ter- oder Quarterpolymere eingesetzt werden, welche Wiederholungseinheiten mindestens eines konjugierten Diens, mindestens eines α,β-ungesättigten Nitrils und gegebenenfalls einer oder mehrerer weiterer copolymerisierbarer Monomere enthalten.

Das konjugierte **Dien** kann von jeder Natur sein. Bevorzugt werden konjugierte (C₄-C₆)-Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes **Nitril** kann jedes bekannte α,β-ungesättigte Nitril eingesetzt werden, bevorzugt sind (C₃-C₅)-α,β-ungesättigte Nitrile wie Acrylnitril (ACN), Methacrylnitril, Ethacrylnitril oder Mischungen davon. Besonders bevorzugt ist Acrylnitril.

Einen besonders bevorzugten Nitrilkautschuk stellt somit ein Copolymer aus Acrylnitril und 1,3-Butadien dar.

Neben dem konjugierten Dien und dem α,β-ungesättigten Nitril können noch ein oder mehrere weitere dem Fachmann bekannte, **copolymerisierbare Monomere** eingesetzt werden, z.B. α,β-ungesättigte Mono- oder Dicarbonsäuren, deren Ester oder Amide.

Als **α,β-ungesättigte Mono- oder Dicarbonsäuren** sind dabei Fumarsäure, Maleinsäure, Acrylsäure und Methacrylsäure bevorzugt.

### Als Ester der α,β-ungesättigten Carbonsäuren werden

- **Alkyl-,** insbesondere C₁-C₁₈-Alkyl-, bevorzugt n-Butyl-, tert.-Butyl-, n-Pentyl- oder n-Hexyl(meth) acrylat;
- **Alkoxyalkyl-,** insbesondere C₁-C₁₈-Alkoxyalkyl-, bevorzugt C₄-C₁₂-Alkoxyalkyl(meth) acrylat;
- **Hydroxyalkyl-,** insbesondere C₁-C₁₈-Hydroxyalkyl-, bevorzugt C₄-C₁₂-Hydroxyalkyl(meth) acrylat;
- **Cycloalkyl-,** insbesondere C₅-C₁₈-Cycloalkyl-, bevorzugt C₆-C₁₂-Cycloalkyl, besonders bevorzugt Cyclopenty(meth)acrylat, Cyclohexyl(meth)acrylat, Cycloheptyl(meth)acrylat;
- **Alkylcycloalkyl-,** insbesondere C₆-C₁₂-Alkylcycloalkyl-, bevorzugt C₇-C₁₀-Alkylcycloalkyl, besonders bevorzugt Methylcyclopentyl(meth)acrylat und Ethylcyclohexyl(meth) acrylat;
- **Aryl-,** insbesondere C₆-C₁₄-Aryl-Monoester, bevorzugt Phenyl(meth)acrylat oder Benzyl(meth)acrylat;
- **aminogruppenhaltige** α,β-ethylenisch ungesättigte Carboxylsäureester wie beispielsweise Dimethylaminomethylacrylat oder Diethylaminoethylacrylat;
- **α,β-ethylenisch ungesättigte** Dicarbonsäuremonoalkylester, bevorzugt
   ∘ Alkyl-, insbesondere C₄-C₁₈-Alkyl-, bevorzugt n-Butyl-, tert.-Butyl-, n-Pentyl-oder n-Hexyl-, besonders bevorzugt Mono-n-butylmaleat, Mono-n-butylfumarat, Mono-n-butylcitraconat, Mono-n-butylitaconat, ganz besonders bevorzugt Mono-n-butylmaleat,
   ∘ Alkoxyalkyl-, insbesondere C₄-C₁₈-Alkoxyalkyl-, bevorzugt C₄-C₁₂-Alkoxyalkyl-,
   ∘ Hydroxyalkyl-, insbesondere C₄-C₁₈-Hydroxyalkyl-, bevorzugt C₄-C₁₂-Hydroxyalkyl-,
   ∘ Cycloalkyl-, insbesondere C₅-C₁₈-Cycloalkyl-, bevorzugt C₆-C₁₂-Cycloalkyl, besonders bevorzugt Monocyclopentylmaleat, Monocyclohexylmaleat, Monocycloheptylmaleat, Monocyclopentylfumarat, Monocyclohexylfumarat, Monocycloheptylfumarat, Monocyclopentylcitraconat, Monocyclohexylcitraconat, Monocycloheptylcitraconat, Monocyclopentylitaconat, Monocyclohexylitaconat und Monocycloheptylitaconat,
   ∘ Alkylcycloalkyl-, insbesondere C₆-C₁₂-Alkylcycloalkyl-, bevorzugt C₇-C₁₀-Alkylcycloalkyl, besonders bevorzugt Monomethylcyclopentylmaleat und Monoethylcyclohexylmaleat, Monomethylcyclopentylfumarat und Monoethylcyclohexylfumarat, Monomethylcyclopentylcitraconat und Monoethylcyclohexylcitraconat; Monomethylcyclopentylitaconat und Monoethylcyclohexylitaconat;
   ∘ Aryl-, insbesondere C₆-C₁₄-Aryl-Monoester, bevorzugt Maleinsäuremonoarylester, Fumarsäuremonoarylester, Citraconsäuremonoarylester oder Itaconsäuremonoarylester, besonders bevorzugt Monophenylmaleat oder Monobenzylmaleat, Monophenylfumarat oder Monobenzylfumarat, Monophenylcitraconat oder Monobenzylcitraconat, Monophenylitaconat oder Monobenzylitaconat,
   ∘ ungesättigte Polycarboxylsäurepolyalkylester wie beispielsweise Dimethylmaleat, Dimethylfumarat, Dimethylitaconat oder Diethylitaconat eingesetzt

Einsetzbar sind auch Mischungen von den vorgenannten Estern.

Als Ester der α,β-ungesättigten Carbonsäuren werden vorzugsweise deren Alkylester und Alkoxyalkylester eingesetzt. Besonders bevorzugte Alkylester der α,β-ungesättigten Carbonsäuren sind Methylacrylat, Ethylacrylat, Butylacrylat, Butylmethacrylat, 2-Ethylhexylacrylat, 2-Ethylhexylmethacrylat und Octylacrylat. Besonders bevorzugte Alkoxyalkylester der α,β-ungesättigten Carbonsäuren sind Methoxyethyl(meth)acrylat und Ethoxyethyl(meth)acrylat.Als bevorzugte **α,β-ethylenisch ungesättigte Carbonsäureester** werden außerdem **PEG-Acrylate** eingesetzt, die von der allgemeinen Formel (I) 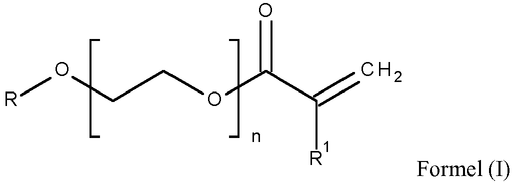 abgeleitet sind, wobei
R gleich verzweigtes oder unverzweigtes C₁-C₂₀-Alkyl, bevorzugt C₂-C₂₀-Alkyl, besonders bevorzugt Ethyl, Butyl oder Ethylhexyl, ist,
n gleich 2 bis 12, bevorzugt 2 bis 8, besonders bevorzugt 2 bis 5 und ganz besonders bevorzugt 2 oder 3 ist und
R¹ gleich Wasserstoff oder CH₃- ist.

Der Begriff **"(Meth)acrylat"** steht im Rahmen dieser Erfindung für "Acrylat" und "Methacrylat". Wenn der Rest R¹ der allgemeinen Formel (I) CH₃- ist, so handelt es sich um ein Methacrylat.

Der Begriff **"Polyethylenglycol"** bzw. die Abkürzung "PEG" steht im Rahmen dieser Erfindung für Ethylenglycol-Abschnitte mit zwei Ethylenglycol-Wiederholungseinheit (PEG-2; n gleich 2) bis 12 Ethylenglycol-Wiederholungeinheiten (PEG-2 bis PEG-12; n gleich 2 bis 12).

Der Begriff **"PEG-Acrylat"** wird auch mit PEG-X-(M)A abgekürzt, wobei "X" für die Anzahl an Ethylenglycol-Wiederholungseinheiten steht, "MA" für Methacrylat steht und "A" für Acrylat steht.

Acrylateinheiten, abgeleitet von PEG-Acrylaten der allgemeinen Formel (I) werden im Rahmen dieser Erfindung als **"PEG-Acrylateinheit"** bezeichnet.

Bevorzugte PEG-Acrylateinheiten sind abgeleitet von den PEG-Acrylaten der nachfolgenden Formeln Nr. 1 bis Nr. 8, wobei n gleich 2, 3, 4, 5, 6, 7, 8, 9, 10, 11 oder 12, bevorzugt 2, 3, 4, 5, 6, 7 oder 8, besonders bevorzugt 2, 3, 4 oder 5 und ganz besonders bevorzugt 2 oder 3 ist:

| | |
|---|---|
| Ethoxypolyethylenglycolacrylat (Formel Nr. 1) | 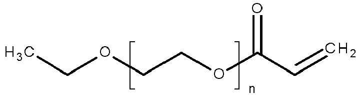 |
| Ethoxypolyethylenglycolmethacrylat (Formel Nr. 2) | 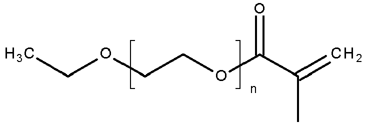 |
| Propoxypolyethylenglycolacrylat (Formel Nr. 3) | 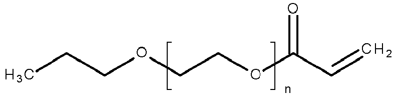 |
| Propoxypolyethylenglycolmethacrylat (Formel Nr. 4) | 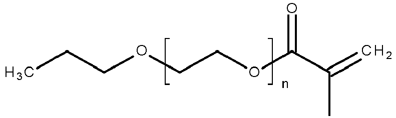 |
| Butoxypolyethylenglycolacrylat (Formel Nr. 5) | 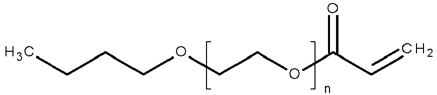 |
| Butoxypolyethylenglycolmeth acrylat (Formel Nr. 6) | 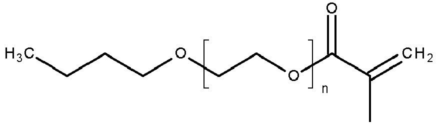 |
| Ethylhexyloxypolyethylenglycolacrylat (Formel Nr. 7) | 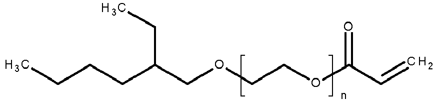 |
| Ethylhexyloxypolyethylenglycol- methacrylat (Formel Nr. 8) | 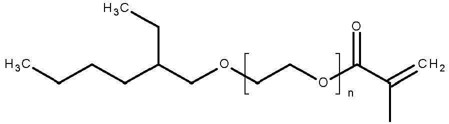 |

Andere gebräuchliche Bezeichnungen für Ethoxypolyethylenglycolacrylat (Formel Nr. 1) sind beispielsweise Poly(ethylenglycol)ethyletheracrylat, Ethoxy-PEG-acrylat, Ethoxypoly(ethylenglycol)monoacrylat oder Poly(ethylenglycol)monoethylether-monoacrylat.

Diese PEG-Acrylate können kommerziell erworben werden, beispielsweise bei Arkema unter dem Handelsnamen Sartomer^{®}, bei Evonik unter dem Handelsnamen Visiomer^{®} oder bei Sigma Aldrich.

In einer bevorzugten Ausführungsform liegt die **Menge** der PEG-Acrylateinheiten im Nitrilkautschuk im Bereich von 0 bis 65 Gew.-%, bevorzugt 20 bis 60 Gew.-% und besonders bevorzugt 20 bis 55 Gew.-%, bezogen auf die Gesamtmenge von 100 Gew.-% aller Monomereinheiten.

In einer alternativen Ausführungsform beträgt die Menge an PEG-Acrylateinheiten im Nitrilkautschuk 20 bis 60 Gew.-% und die Menge an weiteren α,β-ethylenisch ungesättigten Carbonsäureestereinheiten, die sich von den PEG-Acrylateinheiten unterscheiden, 0 bis 40 Gew.-%, bezogen auf die Gesamtmenge von 100 Gew.-% aller Monomereinheiten, wobei die Gesamtmenge an Carbonsäureestereinheiten 60 Gew.-% nicht überschreitet.

In einer alternativen Ausführungsform enthält der Nitrilkautschuk neben der α,β-ethylenisch ungesättigten Nitrileinheit, der konjugierten Dieneinheit und der PEG-Acrylateinheit abgeleitet von einem PEG-Acrylat der allgemeinen Formel (I) als ungesättigte Carbonsäureestereinheit eine Dicarbonsäuremonoalkylestereinheit, bevorzugt Monobutylmaleat.

Bei einem bevorzugten Nitrilkautschuk ist die α,β-ethylenisch ungesättigte Nitrileinheit abgeleitet von Acrylnitril oder Methacrylnitril, besonders bevorzugt von **Acrylnitril,** die konjugierte Dieneinheit von Isopren oder 1,3-Butadien, besonders bevorzugt von **1,3-Butadien,** und die α,β-ethylenisch ungesättigte Carbonsäureestereinheit ausschließlich eine PEG-Acrylateinheit abgeleitet von PEG-Acrylat der allgemeinen Formel (I), wobei n gleich 2 bis 8 ist, besonders bevorzugt von PEG-Acrylat der **allgemeinen Formel (I) mit n gleich 2 oder 3,** wobei keine weitere Carbonsäureestereinheit vorliegt.

Bei einem weiteren bevorzugten Nitrilkautschuk ist die α,β-ethylenisch ungesättigte Nitrileinheit abgeleitet von Acrylnitril oder Methacrylnitril, besonders bevorzugt von **Acrylnitril,** die konjugierte Dieneinheit von Isopren oder 1,3-Butadien, besonders bevorzugt von **1,3-Butadien,** und die α,β-ethylenisch ungesättigte Carbonsäureestereinheit abgeleitet von einem ersten PEG-Acrylat der allgemeinen Formel (I), wobei n gleich 2 bis 12 ist, besonders bevorzugt von PEG-Acrylat der allgemeinen Formel (I) mit n gleich 2 oder 3 und einer α,β-ethylenisch ungesättigten Carbonsäureestereinheit welche sich von den PEG-Acrylateinheiten unterscheidet.

Zusätzlich kann der Nitrilkautschuk ein oder mehrere **weitere copolymerisierbare Monomere** in einer Menge von 0 Gew.-% bis 20 Gew.-%, bevorzugt 0,1 Gew.-% bis 10 Gew.-% bezogen auf die Gesamtmenge von 100 Gew.-% aller Monomereinheiten enthalten. Die Mengen der übrigen Monomereinheiten werden dann geeignet reduziert, so dass die Summe aller Monomereinheiten immer 100 Gew.-% ergibt. Der Nitrilkautschuk kann als weitere copolymerisierbare Monomere ein oder mehrere
- **aromatische Vinylmonomere,** bevorzugt Styrol, α-Methylstyrol und Vinylpyridin,
- **fluorhaltige Vinylmonomere,** bevorzugt Fluorethylvinylether, Fluorpropylvinylether, o-Fluormethylstyrol, Vinylpentafluorbenzoat, Difluorethylen und Tetrafluorethylen, oder auch
- **α-Olefine,** bevorzugt C₂-C₁₂-Olefine wie beispielsweise Ethylen, 1-Buten, 4-Buten, 4-Methyl-1-penten, 1-Hexen oder 1-Octen,
- **nicht-konjugierte Diene,** bevorzugt C₄-C₁₂-Diene wie 1,4-Pentadien, 1,4-Hexadien, 4-Cyanocyclohexen, 4-Vinylcyclohexen, Vinylnorbonen, Dicyclopentadien oder auch
- **Alkine** wie 1- oder 2-Butin,
- **α,β-ethylenisch ungesättigte Monocarbonsäuren,** bevorzugt Acrylsäure, Methacrylsäure, Crotonsäure oder Zimtsäure,
- **α,β-ethylenisch ungesättigte Dicarbonsäuren,** bevorzugt Maleinsäure, Fumarsäure, Citraconsäure, Itakonsäure,
- **copolymerisierbare Antioxidantien,** beispielsweise N-(4-Anilinphenyl)acrylamid, N-(4-Anilinphenyl)methacrylamid, N-(4-Anilinphenyl)cinnamamid, N-(4-Anilinphenyl)crotonamid, N-Phenyl-4-(3-vinylbenzyloxy)anilin, N-Phenyl-4-(4-vinylbenzyloxy)anilin oder
- **vernetzbare Monomere,** beispielsweise Divinyl-Komponenten wie beispielsweise Divinylbenzol;
enthalten.

In einer alternativen Ausführungsform enthält der Nitrilkautschuk als **PEG-Acrylateinheiten** Ethoxy-, Butoxy- oder Ethylhexyloxypolyethylenglycol(meth)acrylat mit 2 **bis 12 Ethylenglycol-Wiederholungseinheiten,** besonders bevorzugt Ethoxy- oder Butoxy Polyethylenglycol(meth)acrylat mit **2 bis 5** Ethylenglycol-Wiederholungseinheiten und ganz besonders bevorzugt Ethoxy- oder Butoxypolyethylenglycol(meth)acrylat mit **2 oder 3** Ethylenglycol-Wiederholungs einheiten.

In einer weiteren alternativen Ausführungsform des Nitrilkautschuks ist n gleich 2 oder 3, R gleich Ethyl oder Butyl und R¹ gleich Wasserstoff oder Methyl, bevorzugt dass **n gleich 2, R gleich Butyl und R¹ gleich Methyl.**

In einer weiteren alternativen Ausführungsform weist der Nitrilkautschuk 8 bis 18 Gew.-% Acrylnitrileinheiten, 27 bis 65 Gew.-% 1,3-Butadieneinheiten und 27 bis 55 Gew.-% PEG-2-Acrylateinheiten oder PEG-3-Acrylateinheiten auf.

In einer weiteren alternativen Ausführungsform enthält der Nitrilkautschuk
- 13 bis 17 Gew.-% α,β-ethylenisch ungesättigten Nitrileinheit, bevorzugt Acrylnitril,
- 36 bis 44 Gew.-% der konjugierten Dieneinheit, bevorzugt 1,3-Butadien, und
- 43 bis 47 Gew.-% PEG-Acrylateinheit, abgeleitet von einem PEG-Acrylat der allgemeinen Formel (I), bevorzugt Butoxydiethylenglycolmethacrylat.

Die **Anteile** an konjugiertem Dien und α,β-ungesättigtem Nitril in den einzusetzenden NBR-Polymeren können in weiten Bereichen schwanken. Der Anteil des oder der Summe der konjugierten Diene liegt üblicherweise im Bereich von 40 Gew.-% bis 90 Gew.-%, bevorzugt im Bereich von 55 Gew.-% bis 85 Gew. %, bezogen auf das Gesamtpolymer. Der Anteil des oder der Summe der α,β-ungesättigten Nitrile liegt üblicherweise bei 10 Gew.-% bis 60 Gew.-%, bevorzugt bei 15 Gew.-% bis 45 Gew.-%, bezogen auf das Gesamtpolymer. Die Anteile der Monomere summieren sich jeweils zu 100 Gew.-% auf. Die zusätzlichen Monomere können in Mengen von 0 Gew.-% bis 40 Gew.%, bevorzugt 0,1 Gew.-% bis 65 Gew.-%, besonders bevorzugt 1 Gew.-% bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Die **Herstellung** der Nitrilkautschuke durch Polymerisation der vorgenannten Monomere ist dem Fachmann hinlänglich bekannt und in der Literatur umfangreich beschrieben (bspw. aus W. Hofmann, Rubber Chem. Technol. 36 (1963).

Nitrilkautschuke, die im erfindungsgemäßen Sinn verwendet werden können, sind ferner käuflich erhältlich, z.B. als Produkte aus der Produktreihe der Marken Perbunan^{®} und Krynac^{®} von der ARLANXEO Deutschland GmbH.

Die zur Metathese **eingesetzten Nitrilkautschuke** besitzen **eine Mooney-Viskosität** (ML 1+4 bei 100°C) im Bereich von 30 bis 100, bevorzugt von 30 bis 50. Dies entspricht einem Gewichtsmittel des Molekulargewicht Mw im Bereich von 150.000 g/mol bis 500.000 g/mol, bevorzugt im Bereich von 180.000 g/mol bis 400.000 g/mol. Die eingesetzten Nitrilkautschuke besitzen ferner eine **Polydispersität PDI = Mw/Mn,** wobei **Mw das Gewichtsmittel** und **Mn das Zahlenmittel** des Molekulargewichts darstellt, im Bereich von 2,0 bis 8,0 und bevorzugt im Bereich von 2,0 bis 6,0.

Die Bestimmung der Mooney-Viskosität erfolgt dabei gemäß ASTM Norm D 1646.

Die durch das erfindungsgemäße Metathese-Verfahren **erhaltenen Nitrilkautschuke** besitzen eine Mooney-Viskosität (ML 1+4 bei 100°C) im Bereich von 5 bis 35, bevorzugt im Bereich von 5 bis 25. Dies entspricht einem Gewichtsmittel des Molekulargewicht Mw im Bereich von 10.000 g/mol bis 150.000 g/mol, bevorzugt im Bereich von 10.000 g/mol bis 100.000 g/mol. Die erhaltenen Nitrilkautschuke besitzen ferner eine Polydispersität PDI = Mw/Mn, wobei Mn das Zahlenmittel des Molekulargewichts darstellt, im Bereich 1,4 bis 4,0 bevorzugt im Bereich von 1,5 bis 3,0.

Gegenstand der vorliegenden Erfindung ist ferner die **Verwendung** der Ruthenium-Komplexkatalysatoren in Metathese-Reaktionen zur Metathese von Nitrilkautschuken. Bei den Metathese-Reaktionen kann es sich beispielsweise um Ringschlussmetathesen (RCM), Kreuzmetathesen (CM) oder auch RingöffNungsmetathesen (ROMP) handeln. Üblicherweise wird dafür der Nitrilkautschuk mit dem Ruthenium-Komplexkatalysator in Kontakt und zur Umsetzung gebracht.

Bei der erfindungsgemäßen Verwendung handelt es sich um ein Verfahren zum Molekulargewichtsabbau des Nitrilkautschuks, indem man den Nitrilkautschuk mit dem Ruthenium-Komplexkatalysator in Kontakt bringt. Diese Reaktion stellt eine Kreuzmetathese dar.

An den Metatheseabbau in Gegenwart des erfindungsgemäßen Katalysator-Systems kann sich eine **Hydrierung** der erhaltenen abgebauten Nitrilkautschuke anschließen. Diese kann in einer dem Fachmann bekannten Art und Weise erfolgen.

Es ist möglich, die Hydrierung unter Einsatz **homogener oder heterogener Hydrierkatalysatoren** durchzuführen. Es ist ferner möglich, die Hydrierung in-situ durchzuführen, d.h. in dem gleichen Reaktionsgemisch, in dem zuvor auch der Metathese-Abbau erfolgte und ohne Notwendigkeit, den abgebauten Nitrilkautschuk zu isolieren. Der Hydrierkatalysator wird einfach dem Reaktionsgefäß zugesetzt.

Die **eingesetzten Katalysatoren** basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637, DE-A-25 39 132, EP-A- 0 134 023, DE-OS- 35 41 689, DE-OS- 35 40 918, EP-A-0 298 386, DE-OS- 35 29 252, DE-OS- 34 33 392, US-A-4,464,515 und US-A-4,503,196).

Geeignete Katalysatoren und Lösungsmittel für eine **Hydrierung in homogener Phase** werden im Folgenden beschrieben und sind auch aus DE-A-2539132 und der EP-A-0471250 bekannt.

Die selektive Hydrierung kann beispielsweise in Gegenwart eines **Rhodium- oder Rutheniumhaltigen Katalysators** erreicht werden. Einsetzbar ist beispielsweise ein Katalysator der allgemeinen Formel

(R¹ₘB)₁ M Xₙ,

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ AralkylGruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01 Gew.-% bis 1 Gew.%, bevorzugt im Bereich von 0,03 Gew.-% bis 0,5 Gew.% und besonders bevorzugt im Bereich von 0,05 Gew.-% bis 0,3 Gew.% bezogen auf das Gewicht des Polymers sind geeignet.

Üblicherweise ist es sinnvoll, den Katalysator zusammen mit einem **Co-Katalysator** zu verwenden, der ein Ligand der Formel R¹ mB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkyl-monocycloalkyl, Dicycloalkyl-monoaryl oder Dicyclalkyl-monoaryl-Resten.

Beispiele von **Co-Katalysatoren** finden sich beispielsweise in US-A-4631315. Bevorzugter Co-Katalysator ist Triphenylphosphin. Bevorzugt liegt ferner das Gewichtsverhältnis des Rhodiumhaltigen Katalysators zum Co-Katalysator im Bereich von 1:1 bis 1:55, besonders bevorzugt im Bereich von 1:3 bis 1:30. Bezogen auf 100 Gewichtsteile des zu hydrierenden Nitrilkautschuks werden geeigneter Weise 0,1 bis 33 Gewichtsteile des Co-Katalysators, bevorzugt 0,2 Gewichtsteile bis 20 Gewichtsteile und ganz besonders bevorzugt 0,5 bis 5 Gewichtsteile, insbesondere mehr als 0,9 Gewichtsteile aber weniger als 5 Gewichtsteile Co-Katalysator bezogen auf 100 Gewichtsteile des zu hydrierenden Nitrilkautschuks eingesetzt.

Die **praktische Durchführung** dieser Hydrierung ist dem Fachmann aus US-A-6683136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100°C bis 150°C und einem Druck im Bereich von 5 MPa bis 15 MPa für 2 Stunden bis 10 Stunden mit Wasserstoff beaufschlagt.

Unter **Hydrierung** wird im Rahmen dieser Erfindung eine Umsetzung der im Ausgangs-Nitrilkautschuk vorhandenen Doppelbindungen zu mindestens 50%, bevorzugt 70% bis 100%, besonders bevorzugt 80% bis 100%, verstanden. Besonders bevorzugt sind auch Restgehalte von Doppelbindungen im HNBR von 0% bis 8%.

Bei Einsatz **heterogener Katalysatoren** handelt es sich üblicherweise um geträgerte Katalysatoren auf der Basis von Palladium, die z. B. auf Kohle, Kieselsäure, Calciumcarbonat oder Bariumsulfat geträgert sind.

Nach Abschluss der Hydrierung **erhält man einen hydrierten Nitrilkautschuk** mit einer Mooney-Viskosität (ML 1+4 @ 100°C), gemessen gemäß ASTM Norm D 1646, im Bereich von 1 bis 50. Dies entspricht ungefähr einem Gewichtsmittel des Molekulargewicht Mw im Bereich von 2.000 g/mol bis 400.000 g/mol. Bevorzugt liegt die Mooney-Viskosität (ML 1+4 @100°C) im Bereich von 5 bis 40. Dies entspricht ungefähr einem Gewichtsmittel des Molekulargewicht Mw im Bereich von ca. 20.000 g/mol bis 200.000 g/mol. Die erhaltenen hydrierten Nitrilkautschuke besitzen ferner eine Polydispersität PDI= Mw/Mn, wobei Mw das Gewichtsmittel und Mn das Zahlenmittel des Molekulargewichts darstellt, im Bereich von 1 bis 5 und bevorzugt im Bereich von 1,5 bis 3.

### Beispiele

### I Beschreibung der Analytikmethoden

### Durchführung der Gelpermeationschromatographie (GPC):

Das Molekulargewicht Mₙ und M_{w} wird berechnet mittels der Waters Empower 2 Data Base Software, und bestimmt unter Verwendung des folgenden Equipments: Eine Shimatzu LC-20AT high performance liquid chromatography (HPLC) Pumpe, ein SFD S5200 Autosampler, 3 PLgel 10 µm Mixed-B-Säule (300 x 7.5 mm ID), ein Shodex RI-71 Detektor, ein ERC-Säulen oven. Die GPC-Versuche wurden durchgeführt bei 40°C und einer Flussrate von 1 mL/min mit Tetrahydrofuran (THF) als Elutionsmittel. Die GPC-Säule wurde kalibriert mit Polystyrol (PS) Standardproben.

### Bestimmung des Restdoppelbindungsgehalts ("RDB"):

Der RDB in % wird bestimmt mittels der folgenden FT-IR-Methode: Das Spektrum des Nitrilkautschuks wird vor, während und nach der Hydrierungsreaktion aufgenommen mittels eines Thermo Nicolet FT-IR Spektrometers des Typs AVATAR 360. Die NBR-Lösung in Monochlorbenzol wurde auf eine NaCl Scheibe aufgebracht und getrocknet um einen Film für die Untersuchung zu erhalten. Die Hydrierrate wird bestimmt mittels der FT-IR-Analyse gemäß der ASTM Norm D 5670-95.

### Bestimmung der Mooney Viskosität:

Die Bestimmung der Mooney Viskosität wird durchgeführt nach der Vorschrift der ASTM Norm Standard D 1646. Die Mooney Viskosität ML 1+4 @ 100°C wurde gemessen bei 100°C mit einer Minute Vorheizzeit und 4 Minuten Messzeit.

### Bestimmung der Brookfield Viskosität:

Die Lösungsviskosität einer Polymerlösung in MCB wird mit einem Rotationsviskosimeter LV DV II+ von Brookfield bestimmt. Die Messungen wurden mit einer Standardspindel 62 in einem 400 mL Becherglas gefüllt mit 250 mL Polymerlösung bei einer Temperatur von 23 ± 0,1 °C durchgeführt.

### II Verwendete Materialien

In **Tabelle 1** sind die in den nachfolgend beschriebenen Beispielen eingesetzten nicht erfindungsgemäßen Katalysatoren zusammengefasst (Grubbs-II, Grubbs-Hoveyda II, Zhan 1B, M71 SIMes und M73 SIMes).

In **Tabelle 2** sind die in den nachfolgend beschriebenen Beispielen eingesetzten erfindungsgemäßen Katalysatoren zusammengefasst (M71 SIPr, M73 SIPr, M74 SIPr).

**Tabelle 1: Nicht erfindungsgemäße eingesetzte Katalysatoren**

| **Bezeichnung des Katalysators** | **Strukturformel** | **Molekulargewicht [g/mol]** | **Bezugsquelle** |
|---|---|---|---|
| Grubbs-II-Katalysator (G II) | 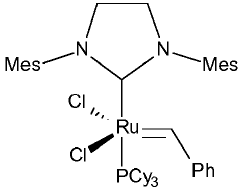 | 848,33 | Materia / Pasadena; USA |
| Grubbs- Hoveyda II-Katalysator (GH II) | 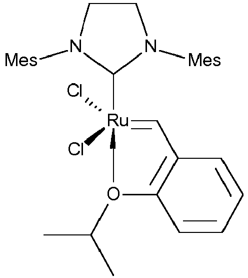 | 626,14 | Aldrich |
| Zhan 1B | 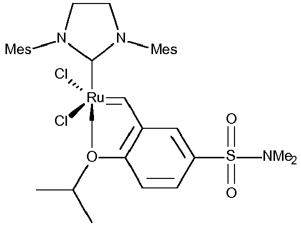 | 733,75 | Strem Chemicals |
| M71 SIMes | 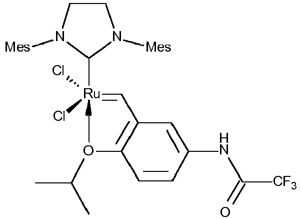 | 737,64 | Umicore |
| | | | |
| M73 SIMes | 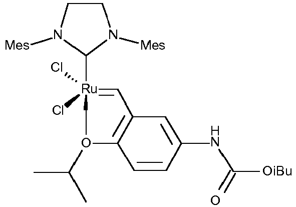 | 741,75 | Umicore |

**Tabelle 2: Erfindungsgemäße eingesetzte Katalysatoren**

| **Bezeichnung des Katalysators** | **Strukturformel** | **Molekulargewicht [g/mol]** | **Bezugsquelle** |
|---|---|---|---|
| M71 SIPr | 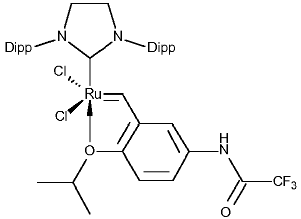 | 821,80 | Umicore |
| M73 SIPr | 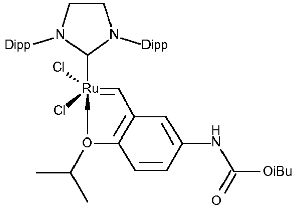 | 825,91 | Umicore |
| M74 SIPr | 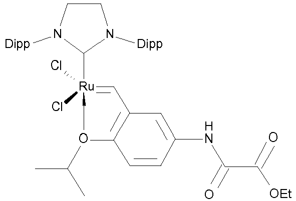 | 825,87 | Umicore |

### Legende:

Ph steht jeweils für einen Phenyl-Rest.

Dipp steht jeweils für einen Diisopropylphenyl-Rest.

Mes steht jeweils für einen 2,4,6-Trimethylphenyl-Rest.

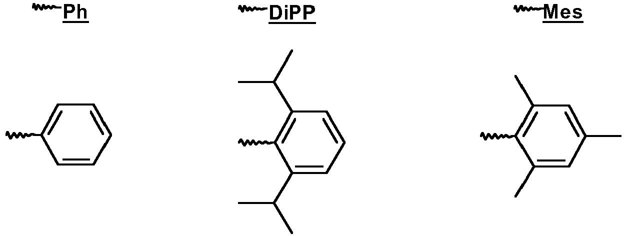

### Eingesetzte Nitrilkautschuke

Die nachfolgend beschriebenen Beispiele wurden unter Einsatz unterschiedlicher NBR- und HNBR-Typen der ARLANXEO Deutschland GmbH durchgeführt. Diese Nitrilkautschuke wiesen die in Tabelle 2 charakteristischen Kenngrößen auf.

**Tabelle 2: Eingesetzte Nitrilkautschuke**

| **Nitrilkautschuk** | **Acrylnitril-Gehalt (ACN) [Gew.-%** ] | **Mooneywert (ML 1+4 @100°C) [MU]** | **Molekulargewicht M_{w} [kg/mol]** | **Molekulargewicht Mₙ [kg/mol]** | **PDI** | **RDB** |
|---|---|---|---|---|---|---|
| NBR-1 | 34 | 30 | 250 | 75 | 3,4 | 100 |
| NBR-2 | 34 | 30 | 252 | 75 | 3,4 | 100 |
| NBR-3 | 34 | 30 | 273 | 75 | 3,7 | 100 |
| NBR-4 | 34 | 30 | 251 | 74 | 3,4 | 100 |
| NBR-5 | 34 | 30 | 240 | 71 | 3,4 | 100 |
| NBR-6 | 34 | 30 | 266 | 73 | 3,6 | 100 |
| NBR-7 | 34 | 35 | 263 | 75 | 3,5 | 100 |
| NBR-8 | 34 | 30 | - | - | - | 100 |
| HNBR | 34 | 68 | 283 | 83 | 3,4 | 5,5 |

| | | | | | | |
|---|---|---|---|---|---|---|
| PDI = M_{w}/Mₙ; MU = Mooney Units | | | | | | |

**Tabelle 3: Eingesetzte Zusätze**

| **Zusatz** | **Strukturformel** | **Molekular -gewicht [g/mol]** | **Quelle** |
|---|---|---|---|
| Lithiumbromid | LiBr | 86,85 | Aldrich |
| Lithiumchlorid | LiCl | 42,39 | Fluka |
| Magnesiumchlorid | MgCl₂ | 95,21 | Fluka |
| Kalziumchlorid | CaCl₂ | 110,98 | Aldrich |
| Triisoprpyl-borat | (OiPr)₃B | 188,07 | Aldrich |
| Titanisopropoxid | Ti(O*i*Pr)₄ | 284,22 | Aldrich |

### III Metathesereaktionen:

Tabelle 3 gibt eine Übersicht über die erfindungsgemäßen Beispiele und die entsprechenden nicht erfindungsgemäßen Referenzbeispiele, wobei die **erfindungsgemäßen Beispiele** mit "*" gekennzeichnet sind.

In den Beispielen 1a bis 8b* und 12* bis 17* wurde der Nitrilkautschukabbau als **Kreuzmetathese mit Zusätzen von 1-Hexen** durchgeführt. Sowohl bei den erfindungsgemäßen als auch bei den entsprechenden Referenzbeispielen wurden die Katalysatoren in solchen Mengen eingesetzt, dass jeweils Rutheniumeinsätze von 9 ppm und 18 ppm resultierten.

In den Beispielen 9, 10* und 11 wurde der Nitrilkautschukabbau als **Selbstmetathese ohne Zusätze** von 1-Hexen durchgeführt. Diese Beispiele wurden bei Rutheniumeinsätzen von 67 ppm durchgeführt.

In den Beispielen 17* und 18 wurde die **Metathese von teilhydriertem Nitrilkautschuk** durchgeführt. Die Metathese wurde ohne Zusätze von 1-Olefin (Selbstmetathese) bei Rutheniumeinsätzen von 151 ppm und bei 100°C durchgeführt.

**Tabelle 3: Übersicht über die durchgeführten Versuche (*=erfindungsgemäße Versuche)**

| **Nr.** | **NBR-Typ** | **Katalysator** | | | **Zusatz** | | **1-Hexen Menge [phr]** | **T [°C]** | **Mₙ (24 h) [kg/mol]** | **M_{w} (24 h) [kg/mol]** |
|---|---|---|---|---|---|---|---|---|---|---|
| | | **Art** | **Menge [mmol]** | **Ru [ppm]** | | | | | | |
| | | | | | **Art** | **Menge [phr]** | | | | |
| 1a | NBR-1 | G II | 0,0066 | 9 | - | - | 4 | 22 | **59** | **161** |
| 1b | NBR-1 | G II | 0,0133 | 18 | - | - | 4 | 22 | **48** | **116** |
| 2a | NBR-2 | GH II | 0,0066 | 9 | - | - | 4 | 22 | **54** | **145** |
| 2b | NBR-2 | GH II | 0,0133 | 18 | - | - | 4 | 22 | **45** | **107** |
| 3a | NBR-2 | Zhan 1B | 0,0066 | 9 | - | - | 4 | 22 | **54** | **157** |
| 3b | NBR-2 | Zhan 1B | 0,0133 | 18 | - | - | 4 | 22 | **45** | **106** |
| 4a | NBR-3 | M71 SIMes | 0,0066 | 9 | - | - | 4 | 22 | **62** | **187** |
| 4b | NBR-3 | M71 SIMes | 0,0133 | 18 | - | - | 4 | 22 | **50** | **135** |
| 5a* | NBR-4 | M71 SIPr | 0,0067 | 9 | - | - | 4 | 22 | **42** | **99** |
| 5b* | NBR-4 | M71 SIPr | 0,0134 | 18 | - | - | 4 | 22 | **28** | **62** |
| 6a | NBR-5 | M73 SIMes | 0,0066 | 9 | - | - | 4 | 22 | **56** | **157** |
| 6b | NBR-5 | M73 SIMes | 0,0132 | 18 | - | - | 4 | 22 | **43** | **101** |
| 7a* | NBR-5 | M73 SIPr | 0,0066 | 9 | - | - | 4 | 22 | **41** | **95** |
| 7b* | NBR-5 | M73 SIPr | 0,0132 | 18 | - | - | 4 | 22 | **27** | **56** |
| 8a* | NBR-4 | M74 SIPr | 0,0067 | 9 | - | - | 4 | 22 | **43** | **106** |
| 8b* | NBR-4 | M74 SIPr | 0,0133 | 18 | - | - | 4 | 22 | **30** | **61** |
| 9 | NBR-6 | M73 SIMes | 0,0500 | 67 | - | - | 0 | 22 | **60** | **164** |
| 10* | NBR-6 | M73 SIPr | 0,0500 | 67 | - | - | 0 | 22 | **52** | **124** |
| 11 | NBR-6 | GH II | 0,0500 | 67 | - | - | 0 | 22 | **56** | **145** |
| 12* | NBR-3 | M71 SIPr | 0,0066 | 9 | LiBr | 1,8 | 4 | 22 | **23** | **50** |
| 13* | NBR-3 | M73 SIPr | 0,0066 | 9 | Ti(O*i*Pr)₄ | 0,039 | 4 | 22 | **35** | **81** |
| 14* | NBR-3 | M73 SIPr | 0,0132 | 18 | MgCl₂ | 0,65 | 4 | 22 | **23** | **49** |
| 15* | NBR-3 | M71 SIPr | 0,0066 | 9 | CaCl₂ | 0,5 | 4 | 22 | **32** | **68** |
| 16* | NBR-3 | M73 SIPr | 0,0132 | 18 | LiCl | 0,65 | 4 | 22 | **10** | **22** |
| 17* | HNBR | M73 SIPr | 0,0750 | 151 | - | - | 0 | 100 | **71** | **186** |
| 18 | HNBR | GH II | 0,0750 | 151 | - | - | 0 | 100 | **73** | **195** |

| | | | | | | | | | | |
|---|---|---|---|---|---|---|---|---|---|---|
| G II = Grubbs II Katalysator; GH II = Grubbs-Hoveyda II Katalysator; | | | | | | | | | | |

### Durchführung der Metathesereaktionen

Sämtliche Metathesereaktionen wurden in Lösung unter Verwendung von Monochlorbenzol (Firma Aldrich), nachfolgend "MCB" genannt, durchgeführt. Vor dem Einsatz wurde das MCB destilliert und bei Raumtemperatur durch Durchleiten von Stickstoff inertisiert. Die in den folgenden Tabellen vermerkten Mengen an Nitrilkautschuk wurden während eines Zeitraums von 12 Stunden unter Schütteln bei Raumtemperatur in MCB gelöst. Zu der kautschukhaltigen Lösung wurden die in den Tabellen vermerkten Zusätze (Olefine) hinzugegeben und zur Homogenisierung 2 Stunden gerührt. Für Versuche mit Zusätzen, wurden an dieser Stelle die Zusätze zugegeben und die kautschukhaltige Lösung erneut 1 Stunde gerührt. Die monochlorbenzolischen Kautschuklösungen wurden vor der Katalysatorzugabe auf die in den Tabellen vermerkten Temperaturen erwärmt. Die Reaktionsansätze 1 bis 11 waren so ausgelegt, dass die Kautschukkonzentration nach Katalysatorzugabe 15 Gew.-% betrug, die Reaktionsansätze 12 und 13 waren so ausgelegt, dass die Kautschukkonzentration nach Katalysatorzugabe 10 Gew.-% betrug.

Die Metathesekatalysatoren (siehe Tabelle 1) wurden jeweils in 1 mL (0,0066 mmol Katalysator) bzw. 2 mL (0,013 mmol Katalysator) MCB gelöst und sofort zu den Nitrilkautschuk-Lösungen zugesetzt. Mit der Katalysatorzugabe wurden die Metathesereaktionen gestartet und in regelmäßigen Zeitabschnitten (1 Stunde, 3 Stunden, 24 Stunden) durch Messung des mittleren Molekulargewichtes mittels Gelpermeationschromatographie verfolgt. Die zur Bestimmung des Molekulargewichtes genommenen Proben (jeweils 5 mL) wurden unverzüglich durch Zugabe von 0,8 mL Ethylvinylether abgestoppt. Von den Endproben (nach 24 Stunden Reaktionszeit) wurden außerdem die Viskositäten in Lösung mit Hilfe eines Brookfield-Viskosimeters (Messtemperatur: 21°C) bestimmt.

### Erfindungsgemäße Beispiele und Vergleichsbeispiele

**Beispiele la und b: Umsetzung von NBR mit Grubbs II-Katalysator**

| **Kautschuk** | | | |
|---|---|---|---|
| **Bezeichnung** | **ACN-Gehalt [Gew. %]** | **ML1+4(100°C) [MU]** | **Menge [g]** |
| NBR-1 | 34 | 30 | 75,15 |

| **Reaktionsbedingungen** | | | | | | | |
|---|---|---|---|---|---|---|---|
| **Nr.** | **Katalysator** | | | | **Co-Olefin** | | **Temperatur** |
| | **Art** | **Menge [mg]** | **Menge [mmol]** | **Ru bezogen auf NBR [ppm]** | **Art** | **Menge [phr]** | **[°C]** |
| **1a** | Grubbs II | 5,6 | 0,0066 | 9 | 1-Hexen | 4 | 22 |
| **1b** | | 11,2 | 0,0133 | 18 | 1-Hexen | 4 | 22 |

| | **Beispiel 1a** | | | | **Beispiel 1b** | | | |
|---|---|---|---|---|---|---|---|---|
| **Analytische Daten** | **Reaktionszeit [h]** | | | | **Reaktionszeit [h]** | | | |
| | **0** | **1** | **3** | **24** | **0** | **1** | **3** | **24** |
| **M_{w} [kg/mol]** | 250 | 174 | 161 | 161 | 252 | 133 | 116 | 116 |
| **Mₙ [kg/mol]** | 75 | 62 | 59 | 59 | 75 | 53 | 48 | 48 |
| **PDI** | 3,4 | 2,8 | 2,7 | 2,8 | 3,4 | 2,5 | 2,4 | 2,4 |
| **Viskosität [mPa*s]** | 2434 | - | - | 603 | 2434 | - | - | 271 |
| **Viskostität** / **M_{w} [Pa*s*mol/kg]** | 0,0101 | - | - | 0,0044 | 0,0101 | - | - | 0,0030 |

**Beispiele 2a und b: Umsetzung von NBR mit Grubbs-Hoveyda II-Katalysator**

| **Kautschuk** | | | |
|---|---|---|---|
| **Bezeichnung** | **ACN-Gehalt [Gew. %]** | **ML1+4(100°C) [MU]** | **Menge [g]** |
| NBR-2 | 34 | 30 | 75,05 |

| **Reaktionsbedingungen** | | | | | | | |
|---|---|---|---|---|---|---|---|
| **Nr.** | **Katalysator** | | | | **Co-Olefin** | | **Temperatur** |
| | **Art** | **Menge [mg]** | **Menge [mmol]** | **Ru bezogen auf NBR [ppm]** | **Art** | **Menge [phr]** | **[°C]** |
| **2a** | Grubbs-Hoveyda II | 5,9 | 0,0066 | 9 | 1-Hexen | 4 | 22 |
| **2b** | | 11,7 | 0,0133 | 18 | 1-Hexen | 4 | 22 |

| | **Beispiel 2a** | | | | **Beispiel 2b** | | | |
|---|---|---|---|---|---|---|---|---|
| **Analytische Daten** | **Reaktionszeit [h]** | | | | **Reaktionszeit [h]** | | | |
| | **0** | **1** | **3** | **24** | **0** | **1** | **3** | **24** |
| **M_{w} [kg/mol]** | 252 | 145 | 145 | 145 | 252 | 107 | 107 | 107 |
| **Mₙ [kg/mol]** | 75 | 55 | 55 | 54 | 75 | 45 | 45 | 45 |
| **PDI** | 3,4 | 2,6 | 2,7 | 2,7 | 3,4 | 2,4 | 2,4 | 2,4 |
| **Viskosität [mPa*s]** | 2774 | - | - | 623 | 2774 | - | - | 293 |
| **Viskosität** / **M_{w} [Pa*s*mol/kg]** | 0,0110 | - | - | 0,0043 | 0,0110 | - | - | 0,0027 |

**Beispiele 3a und b: Umsetzung von NBR mit Zhan 1B-Katalysator**

| **Kautschuk** | | | |
|---|---|---|---|
| **Bezeichnung** | **ACN-Gehalt [Gew. %]** | **ML1+4(100°C) [MU]** | **Menge [g]** |
| NBR-2 | 34 | 30 | 75,05 |

| **Reaktionsbedingungen** | | | | | | | |
|---|---|---|---|---|---|---|---|
| **Nr.** | **Katalysator** | | | | **Co-Olefin** | | **Temperatur** |
| | **Art** | **Menge** | **Menge** | **Ru** | **Art** | **Menge** | **[°C]** |
| | | **[mg]** | **[mmol]** | **bezogen auf NBR [ppm]** | | **[phr]** | |
| **3a** | Zhan 1B | 4,9 | 0,0066 | 9 | 1-Hexen | **4** | 22 |
| **3b** | | 9,7 | 0,0133 | 18 | 1-Hexen | **4** | 22 |

| | **Beispiel 3a** | | | | **Beispiel 3b** | | | |
|---|---|---|---|---|---|---|---|---|
| **Analytische Daten** | **Reaktionszeit [h]** | | | | **Reaktionszeit [h]** | | | |
| | **0** | **1** | **3** | **24** | **0** | **1** | **3** | **24** |
| **M_{w} [kg/mol]** | 252 | 156 | 156 | 157 | 252 | 106 | 106 | 106 |
| **Mₙ [kg/mol]** | 75 | 54 | 55 | 54 | 75 | 44 | 44 | 45 |
| **PDI** | 3,4 | 2,9 | 2,8 | 2,9 | 3,4 | 2,4 | 2,4 | 2,3 |
| **Viskosität [mPa*s]** | 2774 | - | - | 697 | 2774 | - | - | 282 |
| **Viskosität** / **M_{w} [Pa*s*mol/kg]** | 0,0110 | - | - | 0,0044 | 0,0110 | - | - | 0,0027 |

**Beispiele 4a und b: Umsetzung von NBR mit M71 SIMes-Katalysator**

| **Kautschuk** | | | |
|---|---|---|---|
| **Bezeichnung** | **ACN-Gehalt [Gew. %]** | **ML1+4(100°C) [MU]** | **Menge [g]** |
| NBR-3 | 34 | 30 | 75,00 |

| **Reaktionsbedingungen** | | | | | | | |
|---|---|---|---|---|---|---|---|
| **Nr.** | **Katalysator** | | | | **Co-Olefin** | | **Temperatur** |
| | **Art** | **Menge [mg]** | **Menge [mmol]** | **Ru bezogen auf NBR [ppm]** | **Art** | **Menge [phr]** | **[°C]** |
| **4a** | M71 SIMes | 4,9 | 0,0066 | 9 | 1-Hexen | 4 | 22 |
| **4b** | | 9,8 | 0,0133 | 18 | 1-Hexen | 4 | 22 |

| | **Beispiel 4a** | | | | **Beispiel 4b** | | | |
|---|---|---|---|---|---|---|---|---|
| **Analytische Daten** | **Reaktionszeit [h]** | | | | **Reaktionszeit [h]** | | | |
| | **0** | **1** | **3** | **24** | **0** | **1** | **3** | **24** |
| **M_{w} [kg/mol]** | 273 | - | - | 187 | 273 | - | - | 135 |
| **Mₙ [kg/mol]** | 75 | - | - | 62 | 75 | - | - | 50 |
| **PDI** | 3,7 | - | - | 3,0 | 3,7 | - | - | 2,7 |
| **Viskosität [mPa*s]** | 2959 | - | - | 907 | 2959 | - | - | 409 |
| **Viskosität** / **M_{w} [Pa*s*mol/kg]** | 0,0108 | - | - | 0,0049 | 0,0108 | - | - | 0,0030 |

**Beispiele 5a* und b*: Umsetzung von NBR mit M71 SIPr-Katalysator**

| **Kautschuk** | | | |
|---|---|---|---|
| **Bezeichnung** | **ACN-Gehalt** [Gew. %] | **ML1+4(100°C) [MU]** | **Menge [g]** |
| NBR-4 | 34 | 30 | 75,00 |

| **Reaktionsbedingungen** | | | | | | | |
|---|---|---|---|---|---|---|---|
| **Nr.** | **Katalysator** | | | | **Co-Olefin** | | **Temperatur** |
| | **Art** | **Menge [mg]** | **Menge [mmol]** | **Ru bezogen auf NBR [ppm]** | **Art** | **Menge [phr]** | **[°C]** |
| **5a*** | M71 SIPr | 5,5 | 0,0066 | 9 | 1-Hexen | 4 | 22 |
| **5b*** | | 11,0 | 0,0133 | 18 | 1-Hexen | 4 | 22 |

| | **Beispiel 5a** | | | | **Beispiel 5b** | | | |
|---|---|---|---|---|---|---|---|---|
| **Analytische Daten** | **Reaktionszeit [h]** | | | | **Reaktionszeit [h]** | | | |
| | **0** | **1** | **3** | **24** | **0** | **1** | **3** | **24** |
| **M_{w} [kg/mol]** | 251 | 104 | 100 | 99 | 251 | 66 | 63 | 62 |
| **Mₙ [kg/mol]** | 74 | 43 | 42 | 42 | 74 | 29 | 28 | 28 |
| **PDI** | 3,4 | 2,4 | 2,4 | 2,4 | 3,4 | 2,2 | 2,2 | 2,2 |
| **Viskosität [mPa*s]** | 2519 | - | - | 215 | 2519 | - | - | 83 |
| **Viskosität** / **M_{w} [Pa*s*mol/kg]** | 0,0100 | - | - | 0,0022 | 0,0100 | - | - | 0,0029 |

**Beispiele 6a und b: Umsetzung von NBR mit M73 SIMes-Katalysator**

| **Kautschuk** | | | |
|---|---|---|---|
| **Bezeichnung** | **ACN-Gehalt [Gew. %]** | **ML1+4(100°C) [MU]** | **Menge [g]** |
| NBR-5 | 34 | 30 | 75,05 |

| **Reaktionsbedingungen** | | | | | | | |
|---|---|---|---|---|---|---|---|
| **Nr.** | **Katalysator** | | | | **Co-Olefin** | | **Temperatur** |
| | **Art** | **Menge [mg]** | **Menge [mmol]** | **Ru bezogen auf NBR [ppm]** | **Art** | **Menge [phr]** | **[°C]** |
| **6a** | M73 SIMes | 4,9 | 0,0066 | 9 | 1-Hexen | 4 | 22 |
| **6b** | | 9,8 | 0,0132 | 18 | 1-Hexen | 4 | 22 |

| | **Beispiel 6a** | | | | **Beispiel 6b** | | | |
|---|---|---|---|---|---|---|---|---|
| **Analytische Daten** | **Reaktionszeit [h]** | | | | **Reaktionszeit [h]** | | | |
| | **0** | **1** | **3** | **24** | **0** | **1** | **3** | **24** |
| **M_{w} [kg/mol]** | 240 | 158 | 158 | 157 | 240 | 102 | 102 | 101 |
| **Mₙ [kg/mol]** | 71 | 56 | 57 | 56 | 71 | 42 | 44 | 43 |

| | | | | | | | | |
|---|---|---|---|---|---|---|---|---|
| **PDI** | 3,4 | 2,8 | 2,8 | 2,8 | 3,4 | 2,4 | 2,3 | 2,4 |
| **Viskosität [mPa*s]** | 2437 | - | - | 681 | 2437 | - | - | 224 |
| **Viskosität** / **M_{w} [Pa*s*mol/kg]** | 0,0102 | - | - | 0,0043 | 0,0102 | - | - | 0,0022 |

**Beispiele 7a* und b*: Umsetzung von NBR mit M73 SIPr-Katalysator**

| **Kautschuk** | | | |
|---|---|---|---|
| **Bezeichnung** | **ACN-Gehalt [Gew. %]** | **ML1+4(100°C) [MU]** | **Menge [g]** |
| NBR-5 | 34 | 30 | 75,05 |

| **Reaktionsbedingungen** | | | | | | | |
|---|---|---|---|---|---|---|---|
| **Nr.** | **Katalysator** | | | | **Co-Olefin** | | **Temperatur** |
| | **Art** | **Menge [mg]** | **Menge [mmol]** | **Ru bezogen auf NBR [ppm]** | **Art** | **Menge [phr]** | **[°C]** |
| **7a*** | M73 SIPr | 5,5 | 0,0066 | 9 | 1-Hexen | 4 | 22 |
| **7b*** | | 10,9 | 0,0132 | 18 | 1-Hexen | 4 | 22 |

| | **Beispiel 7a** | | | | **Beispiel 7b** | | | |
|---|---|---|---|---|---|---|---|---|
| **Analytische Daten** | **Reaktionszeit [h]** | | | | **Reaktionszeit [h]** | | | |
| | **0** | **1** | **3** | **24** | **0** | **1** | **3** | **24** |
| **M_{w} [kg/mol]** | 240 | 98 | 97 | 95 | 240 | 60 | 57 | 56 |
| **Mₙ [kg/mol]** | 71 | 41 | 40 | 41 | 71 | 28 | 27 | 27 |
| **PDI** | 3,4 | 2,4 | 2,4 | 2,3 | 3,4 | 2,2 | 2,1 | 2,1 |
| **Viskosität [mPa*s]** | 2437 | - | - | 190 | 2437 | - | - | 63 |
| **Viskosität** / **M_{w} [Pa*s*mol/kg]** | 0,0102 | - | - | 0,0020 | 0,0102 | - | - | 0,0011 |

**Beispiele 8a* und b*: Umsetzung von NBR mit M74 SIPr-Katalysator**

| **Kautschuk** | | | |
|---|---|---|---|
| **Bezeichnung** | **ACN-Gehalt [Gew. %]** | **ML1+4(100°C) [MU]** | **Menge [g]** |
| NBR-4 | 34 | 30 | 75,00 |

| **Reaktionsbedingungen** | | | | | | | |
|---|---|---|---|---|---|---|---|
| **Nr.** | **Katalysator** | | | | **Co-Olefin** | | **Temperatur** |
| | **Art** | **Menge [mg]** | **Menge [mmol]** | **Ru bezogen auf NBR [ppm]** | **Art** | **Menge [phr]** | **[°C]** |
| **8a*** | M74 SIPr | 5,5 | 0,0067 | 9 | 1-Hexen | 4 | 22 |
| **8b*** | | 11,0 | 0,0133 | 18 | 1-Hexen | 4 | 22 |

| | **Beispiel 8a** | | | | **Beispiel 8b** | | | |
|---|---|---|---|---|---|---|---|---|
| **Analytische Daten** | **Reaktionszeit [h]** | | | | **Reaktionszeit [h]** | | | |
| | **0** | **1** | **3** | **24** | **0** | **1** | **3** | **24** |
| **M_{w} [kg/mol]** | 251 | 110 | 106 | 106 | 251 | 63 | 61 | 61 |
| **Mₙ [kg/mol]** | 74 | 45 | 44 | 43 | 74 | 31 | 30 | 30 |
| **PDI** | 3,4 | 2,5 | 2,4 | 2,4 | 3,4 | 2,1 | 2,1 | 2,1 |
| **Viskosität [mPa*s]** | 2519 | - | - | 261 | 2519 | - | - | 75 |
| **Viskosität** / **M_{w} [Pa*s*mol/kg]** | 0,0100 | - | - | 0,0025 | 0,0100 | - | - | 0,0025 |

**Beispiel 9: Umsetzung von NBR mit M73 SIMes-Katalysator ohne Olefin**

| **Kautschuk** | | | |
|---|---|---|---|
| **Bezeichnung** | **ACN-Gehalt [Gew.** %] | **ML1+4(100°C) [MU]** | **Menge [g]** |
| NBR-6 | 34 | 30 | 75,00 |

| **Reaktionsbedingungen** | | | | | |
|---|---|---|---|---|---|
| **Nr.** | **Katalysator** | | | | **Temperatur** |
| | **Art** | **Menge [mg]** | **Menge [mmol]** | **Ru bezogen auf NBR [ppm]** | **[°C]** |
| **9** | M73 SIMes | 37,1 | 0,0500 | 67 | 22 |

| | **Beispiel 9** | |
|---|---|---|
| **Analytische Daten** | **Reaktionszeit [h]** | |
| | **0** | 24 |
| **M_{w} [kg/mol]** | 266 | 164 |
| **Mₙ [kg/mol]** | 73 | 60 |
| **PDI** | 3,6 | 2,8 |
| **Viskosität [mPa*s]** | 2599 | 895 |
| **Viskosität** / **M_{w} [Pa*s*mol/kg]** | 0,0098 | 0,0062 |

**Beispiel 10*: Umsetzung von NBR mit M73 SIPr-Katalysator ohne Olefin**

| **Kautschuk** | | | |
|---|---|---|---|
| **Bezeichnung** | **ACN-Gehalt [Gew.%]** | **ML1+4(100°C) [MU]** | **Menge [g]** |
| NBR-6 | 34 | 30 | 75,00 |

| **Reaktionsbedingungen** | | | | | |
|---|---|---|---|---|---|
| **Nr.** | **Katalysator** | | | | **Temperatur** |
| | **Art** | **Menge [mg]** | **Menge [mmol]** | **Ru bezogen auf NBR [ppm]** | **[°C]** |
| **10*** | M73 SIPr | 41,3 | 0,0500 | 67 | 22 |

| | **Beispiel 10** | |
|---|---|---|
| **Analytische Daten** | **Reaktionszeit [h]** | |
| | **0** | **24** |
| **M_{w} [kg/mol]** | 266 | 124 |
| **Mₙ [kg/mol]** | 73 | 52 |
| **PDI** | 3,6 | 2,4 |
| **Viskosität [mPa*s]** | 2599 | 360 |
| **Viskosität** / **M_{w} [Pa*s*mol/kg]** | 0,0098 | 0,0029 |

**Beispiel 11: Umsetzung von NBR mit Grubbs-Hoveyda II-Katalysator ohne Olefin**

| **Kautschuk** | | | |
|---|---|---|---|
| **Bezeichnung** | **ACN-Gehalt [Gew.%]** | **ML1+4(100°C) [MU]** | **Menge [g]** |
| NBR-6 | 34 | 30 | 75,00 |

| **Reaktionsbedingungen** | | | | | |
|---|---|---|---|---|---|
| **Nr.** | **Katalysator** | | | | **Temperatur** |
| | **Art** | **Menge [mg]** | **Menge [mmol]** | **Ru bezogen auf NBR [ppm]** | **[°C]** |
| **11** | Grubbs-Hoveyda II | 44,2 | 0,0500 | 67 | 22 |

| | **Beispiel 11** | |
|---|---|---|
| **Analytische Daten** | **Reaktionszeit [h]** | |
| | **0** | **24** |
| **M_{w} [kg/mol]** | 266 | 145 |
| **Mₙ [kg/mol]** | 73 | 56 |
| **PDI** | 3,6 | 2,6 |
| **Viskosität [mPa*s]** | 2599 | 662 |
| **Viskosität** / **M_{w} [Pa*s*mol/kg]** | 0,0098 | 0,0040 |

**Beispiele 12*-16*: Umsetzung von NBR mit M71 SIPr bzw. M73 SIPr-Katalysator und Zusätzen in Anwesenheit von Olefin**

| **Kautschuk** | | | |
|---|---|---|---|
| **Bezeichnung** | **ACN-Gehalt [Gew. %]** | **ML1+4(100°C) [MU]** | **Menge [g]** |
| NBR-3 | 34 | 30 | 75,00 |

| | | | | **Reaktionsbedingungen** | | | | | | |
|---|---|---|---|---|---|---|---|---|---|---|
| **Nr.** | **Katalysator** | | | | | **Co-Olefin** | | **Zusatz** | | **Temp.** |
| | **Art** | **Menge [mg]** | **Menge [mmol]** | | **Ru bezogen auf NBR [ppm]** | **Art** | **Menge [phr]** | **Art** | **Menge [phr]** | **[°C]** |
| **12*** | M71 SIPr | 5,42 | 0,0066 | | 9 | 1-Hexen | 4 | LiBr | 1,8 | 22 |
| **13*** | M73 SIPr | 5.45 | 0,0066 | | 9 | 1-Hexen | 4 | Ti(OiPr)₄ | 0,039 | 22 |
| **14*** | M73 SIPr | 10.9 | 0,0132 | | 18 | 1-Hexen | 4 | MgCl₂ | 0,65 | 22 |
| **15*** | M71 SIPr | 5.42 | 0,0066 | | 9 | 1-Hexen | 4 | CaCl₂ | 0,5 | 22 |
| **16*** | M73 SIPr | 10.9 | 0,0132 | | 18 | 1-Hexen | 4 | LiCl | 0,65 | 22 |

| | **Beispiel 12** | | | | **Beispiel 13** | | | |
|---|---|---|---|---|---|---|---|---|
| **Analytische Daten** | **Reaktionszeit [h]** | | | | **Reaktionszeit [h]** | | | |
| | **0** | **1** | **3** | **24** | **0** | **1** | **3** | **24** |
| **M_{w} [kg/mol]** | 273 | 59 | 51 | 50 | 273 | 84 | 82 | 81 |
| **Mₙ [kg/mol]** | 75 | 25 | 23 | 23 | 75 | 37 | 34 | 35 |
| **PDI** | 3,7 | 2,3 | 2,2 | 2,1 | 3,7 | 2,3 | 2,4 | 2,3 |
| **Viskosität [mPa*s]** | 2599 | - | - | 46 | 2599 | - | - | 126 |
| **Viskosität** / **M_{w} [Pa*s*mol/kg]** | 0,0098 | - | - | 0,0009 | 0,0098 | - | - | 0,0016 |

| | **Beispiel 14** | | | | **Beispiel 15** | | | |
|---|---|---|---|---|---|---|---|---|
| **Analytische Daten** | **Reaktionszeit [h]** | | | | **Reaktionszeit [h]** | | | |
| | **0** | **1** | **3** | **24** | **0** | **1** | **3** | **24** |
| **M_{w} [kg/mol]** | 273 | 53 | 49 | 49 | 273 | 80 | 71 | 68 |
| **Mₙ [kg/mol]** | 75 | 23 | 21 | 23 | 75 | 37 | 33 | 32 |
| **PDI** | 3,7 | 2,2 | 2,4 | 2,1 | 3,7 | 2,1 | 2,1 | 2,1 |
| **Viskosität [mPa*s]** | 2599 | - | - | 46 | 2599 | - | - | 93 |
| **Viskosität** / **M_{w} [Pa*s*mol/kg]** | 0,0098 | - | - | 0,0009 | 0,0098 | - | - | 0,0014 |

| | **Beispiel 16** | | | |
|---|---|---|---|---|
| **Analytische Daten** | **Reaktionszeit [h]** | | | |
| | **0** | **1** | **3** | **24** |
| | | | | |
| **M_{w} [kg/mol]** | 273 | 40 | 28 | 22 |
| **Mₙ [kg/mol]** | 75 | 18 | 13 | 11 |
| **PDI** | 3,7 | 2,2 | 2,1 | 2,1 |
| **Viskosität [mPa*s]** | 2599 | - | - | 16 |
| **Viskosität** / **M_{w} [Pa*s*mol/kg]** | 0,0098 | - | - | 0,0007 |

**Versuch 17*: Umsetzung von HNBR mit M73 SIPr-Katalysator ohne Olefin**

| **Kautschuk** | | | | |
|---|---|---|---|---|
| **Bezeichnung** | **Art** | **ACN-Gehalt [Gew.%]** | **ML1+4(100°C) [MU]** | **Menge [g]** |
| HNBR | Therban 3467 | 34 | 68 | 50,20 |

| **Reaktionsbedingungen** | | | | | |
|---|---|---|---|---|---|
| **No.** | **Katalysator** | | | | **Temperatur** |
| | **Art** | **Menge [mg]** | **Menge [mmol]** | **Ru bezogen auf NBR [ppm]** | **[°C]** |
| **17*** | M73 SIPr | 61,9 | 0,0750 | 151 | 100 |

| | **Beispiel 18** | |
|---|---|---|
| **Analytische Daten** | **Reaktionszeit [h]** | |
| | **0** | **24** |
| **M_{w} [kg/mol]** | 285 | 186 |
| **Mₙ [kg/mol]** | 83 | 71 |
| **PDI** | 3,4 | 2,6 |
| **Viskosität [mPa*s]** | 3719 | 1395 |
| **Viskosität** / **M_{w} [Pa*s*mol/kg]** | 0,0131 | 0,0075 |

**Beispiel 18: Umsetzung von HNBR mit Grubbs-Hoveyda II-Katalysator ohne Olefin**

| **Kautschuk** | | | | |
|---|---|---|---|---|
| **Bezeichnung** | **Art** | **ACN-Gehalt [Gew. %]** | **ML1+4(100°C) [MU]** | **Menge [g]** |
| HNBR | Therban 3467 | 34 | 68 | 50,20 |

| **Reaktionsbedingungen** | | | | | |
|---|---|---|---|---|---|
| **Nr.** | **Katalysator** | | | | **Temperatur** |
| | **Art** | **Menge [mg]** | **Menge [mmol]** | **Ru bezogen auf NBR [ppm]** | **[°C]** |
| | | | | | |
| **18** | Grubbs-Hoveyda II | 66,3 | 0,0750 | 151 | 100 |

Mit den erfindungsgemäßen Beispielen 5a*, 5b*, 7a*, 7b*, 8a* und 8b* wird gezeigt, dass durch die Verwendung der Katalysatoren M71 SIPr, M73 SIPr und M74 SIPr bei der Kreuzmetathese von Nitrilkautschuk mit 1-Hexene nach Reaktionszeiten von 24 Stunden **niedrigere Molmassen** (M_{w} und Mₙ) als bei den **nicht erfindungsgemäßen** Beispielen 1a, 1b, 2a, 2b, 3a, 3b 4a, 4b, 6a und 6b, bei denen die Katalysatoren Grubbs-II, Grubbs-Hoveyda, Zhan 1B, M71 SIMes und M73SIMes eingesetzt wurden, erhalten werden. Die niedrigeren Molmassen wurden sowohl mit Katalysatoreinsätzen von 9 ppm Ru als auch 18 ppm Ru erzielt.

Des Weiteren wird gezeigt, dass **für die Erzielung gleicher Endmolmassen** des Nitrilkautschuks bei erfindungsgemäßem Einsatz der Katalysatoren M71 SIPr, M73 SIPr und M74 SIPr die **Rutheniummengen** im Vergleich mit den Katalysatoren Grubbs-II, Grubbs-Hoveyda, Zhan 1B, M71 SIMes und M73SIMes **reduziert** werden können. Durch die Reduktion der Menge an teurem Edelmetall wird eine wirtschaftlichere Durchführung der Kreuzmetathese von Nitrilkautschuk ermöglicht.

In den Beispielen 9, 10* und 11 wird gezeigt, dass **bei identischen Rutheniumeinsätzen** von 67 ppm die erfindungsgemäße Verwendung von M73 SIPr (Beispiel 10*) für die **Selbstmetathese** von Nitrilkautschuk (ohne Zugabe von 1-Olefin als Co-Olefin) die **Molmasse** (M_{w} und Mₙ) des Nitrilkautschuks nach 24 Stunden Reaktionszeit **niedriger** als bei Verwendung von M73 SIMes (Beispiel 9) und Grubbs-Hoveyda II (Beispiel 11) ist. Mit Beispiel 10* wird gezeigt, dass durch die erfindungsgemäße Verwendung des Katalysators M73 SIPr ein **ökonomischerer Einsatz** von Ruthenium als mit den bisher für die Metathese von Nitrilkautschuk eingesetzten Katalysatoren ermöglicht wird.

In Beispiel 17* wird gezeigt, dass durch die erfindungsgemäße Verwendung des Katalysators M73 SIPr bei der **Selbstmetathese von teilhydriertem Nitrilkautschuk** im Vergleich mit dem Grubbs-Hoveyda 11-Katalysator (Beispiel 18) nach 24 Stunden **niedrigere Molmassen** (M_{w} und Mₙ) erhalten werden. Durch erfindungsgemäße Verwendung des Katalysators M73 SIPr wird ein ökonomischerer Einsatz des teuren Edelmetalls Ruthenium ermöglicht.

### IV Hydrierungen

Die folgenden Hydrierungen wurden unter Verwendung von NBR-8 der ARLANXEO Deutschland GmbH mit den in Tabelle 2 aufgeführten Charakteristika durchgeführt.

### Durchführung der Hydrierungen

Trockenes Monochlorbenzol (MCB) wurde von VWR bezogen und wie erhalten eingesetzt. Die Ergebnisse der Hydrierversuche sind in Tabelle 4 zusammengefasst.

Die Hydrierungen 1 bis 4* wurden in einem 10 L Hochdruck-Reaktor unter den folgenden Bedingungen durchgeführt:

| | |
|---|---|
| Lösungsmittel: | Monochlorbenzol |
| Substrat: | NBR-8 |
| Feststoffkonzentration: | 12 wt.% NBR-8 in MCB (518 g) |
| Reaktortemperatur: | 137°C bis 140°C |
| Reaktionszeit: | 4 h |
| Katalysatorladung: | 0,2027 g (0,04 phr) |
| Wasserstoffdruck (p H₂): | 8,4 MPa |
| Rührerdrehzahl: | 600 rpm |

Die NBR-8 enthaltende Polymerlösung wird 3 Mal mit H₂ (23°C, 2,0 MPa) unter kräftigem Rühren entgast. Die Temperatur des Reaktors wurde auf 100°C und der H₂-Druck auf 60 bar angehoben. 50 mL einer monochlorbenzolischen Lösung des Katalysators (0,2027 g) wurden zugeben und der Druck auf 8,4 MPa angehoben, während die Reaktortemperatur auf 138°C eingestellt wurde. Beide Parameter wurden während der Reaktion konstant gehalten. Der Reaktionsverlauf wurde mittels Messung des Restdoppelbindungsgehaltes (RDB) der Nitrilkautschuks mittels IR-Spektroskopie verfolgt. Die Reaktion wurde nach 4 Stunden durch Ablassen des Wasserstoffdrucks beendet.

**Tabelle 4: Übersicht über die Hydrierversuche**

| **Nr.** | **Nitrilkautschuk** | | | **Katalysator** | | | **Hydrierverlauf (RDB in [%])** | | | | |
|---|---|---|---|---|---|---|---|---|---|---|---|
| | **Typ** | **Menge [g]** | **Konz. in MCB [Gew.- %]** | **Typ** | **Menge [g]** | **Menge [phr]** | **0 h** | **1 h** | **2 h** | **3 h** | **4 h** |
| **1** | NBR-8 | 518 | 12 | M73 SIMes | 0,2027 | 0,04 | 100 | 43,5 | 28,7 | 22,1 | 17,6 |
| **2** | NBR-8 | 518 | 12 | M73 SIPr | 0,2027 | 0,04 | 100 | 2,1 | 0,8 | 0,5 | 0,4 |
| **3** | NBR-8 | 518 | 12 | M71 SIMes | 0,2027 | 0,04 | 100 | 1,5 | 0,4 | - | - |
| **4** | NBR-8 | 518 | 12 | M71 SIPr | 0,2027 | 0,04 | 100 | 1,5 | 0,5 | - | - |

Die oben aufgeführten Beispiele zeigen einen zumindest gleich guten oder sogar deutlich schnelleren Hydrierverlauf für die erfindungsgemäßen Katalysatoren M73 SIPr und M71 SIPr unter äquivalenten Versuchsbedingungen im Vergleich zu den Katalysatoren M73SIMes und M71 SIMes.

## Patentansprüche

1. Verfahren zum Molekulargewichtsabbau von Nitrilkautschuk, **dadurch gekennzeichnet, dass** der Nitrilkautschuk, gegebenenfalls in Anwesenheit eines Co-Olefins, in Kontakt gebracht und umgesetzt wird mit einem Ruthenium-Komplexkatalysator der allgemeinen Formel (IA) 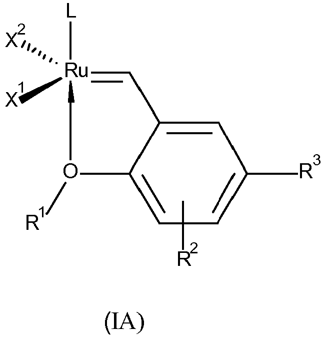 wobei
**X¹ und X²** gleiche oder unterschiedliche anionische Liganden darstellen, bevorzugt Halogen, weiter bevorzugt F, Cl, Br, I und besonders bevorzugt Cl,
**R¹** ein linearer oder verzweigter, aliphatischer C₁-C₂₀-Alkyl, C₃-C₂₀-Cycloalkyl, C₅-C₂₀-Aryl, CHCH₃-CO-CH₃, bevorzugt Methyl, Ethyl, Isopropyl, Isoamyl, t-Butyl, CHCH₃-CO-CH₃, Cyclohexyl oder Phenyl darstellt,
**R²** Wasserstoff, Halogen, C₁-C₆-Alkyl oder C₁-C₆-Alkenyl darstellt,
**R³** einen elektronenziehenden Rest, bevorzugt -F, -Cl, -Br, -I, -NO, -NO₂, -CF₃, -OCF₃, - CN, -SCN, -NCO, -CNO, -COCH₃, -COCF₃, -CO-C₂F₅, -SO₃, -SO₂-N(CH₃)₂, Arylsulfonyl, Arylsulfinyl, Arylcarbonyl, Alkylcarbonyl, Aryloxycarbonyl, oder - NR⁴-CO-R⁵ wobei R⁴ und R⁵ gleich oder verschieden sind und jeweils unabhängig voneinander stehen können für H, C₁-C₆-Alkyl, perhalogeniertes C₁-C₆-Alkyl, Aldehyd, Keton, Ester, Amid, Nitril, gegebenenfalls substituiertes Aryl, Pyridinium-Alkyl, Pyridinium-Perhalogenalkyl oder gegebenenfalls substituiertes C₅-C₆ Cyclohexyl, ein Rest CₙH₂ₙY oder CₙF₂ₙY mit n = 1 bis 6 und Y eine ionische Gruppe oder ein Rest einer der Formeln (EWG 1), (EWG 2) oder (EWG 3) 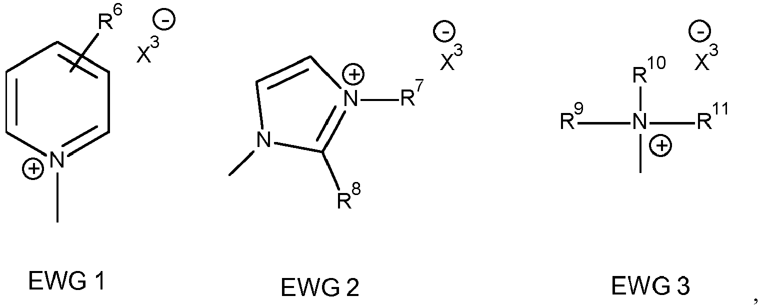
wobei
R⁶, R⁷, R⁸, R⁹, R¹⁰, R¹¹ unabhängig voneinander H, C₁-C₆-Alkyl, C₁-C₆-Perhalogenalkyl oder C₅-C₆-Aryl darstellen und R⁹, R¹⁰, R¹¹ einen Heterozyklus bilden können,
X³ ein Anion, Halogen, Tetrafluorborat ([BF₄]⁻), [Tetrakis-(3,5-bis-(Trifluormethyl)- phenyl)borat]([BARF]⁻), Hexafluorphosphat ([PF₆]⁻), Hexafluorantimonat ([SbF₆]⁻), Hexafluorarsenat ([AsF₆]⁻) oder Trifluormethylsulfonat ([(CF₃)₂N]⁻) darstellt;
R⁴ und R⁵ können mit dem N und dem C an welches sie gebunden sind einen Heterozyklus der Formel (EWG 4) oder (EWG 5) 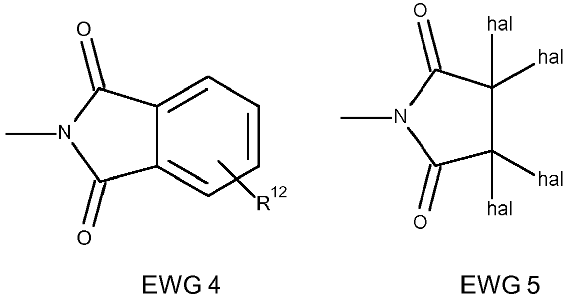
bilden, wobei
hal für Halogen und
R¹² für Wasserstoff, C₁-C₆-Alkyl, C₅-C₆-Cycloalkyl oder C₅-C₆-Cycloaryl steht,
L einen NHC-Liganden der allgemeinen Formel (L1) oder (L2) 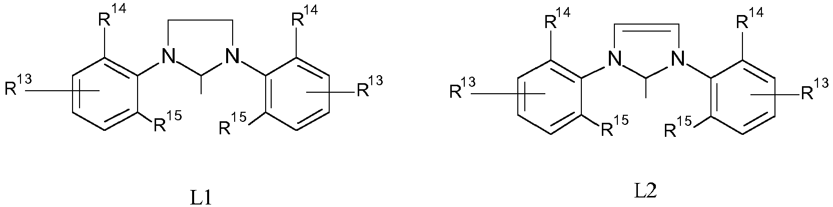
darstellt, wobei
R¹³ für Wasserstoff, C₁-C₆-Alkyl, C₃-C₃₀-Cycloalkyl oder C₅-C₃₀-Aryl steht,
R¹⁴ und R¹⁵ gleich oder verschieden sind und für linear oder verzweigtes C₃-C₃₀-Alkyl, C₃-C₃₀-Cycloalkyl, C₅-C₃₀-Aryl, C₅-C₃₀-Alkaryl, C₅-C₃₀-Aralkyl, mit gegebenenfalls bis zu 3 Heteroatomen, bevorzugt für Isopropyl, i-Butyl, tert-Butyl, Cyclohexyl oder Phenyl steht.

2. Verfahren zum Molekulargewichtabbau von Nitrilkautschuk nach Anspruch 1, **dadurch gekennzeichnet, dass** L einem NHC-Liganden der Formeln L1a, L2a, L1b, L2b, L1c, L2c, L1d, L2d, L1e und L2e 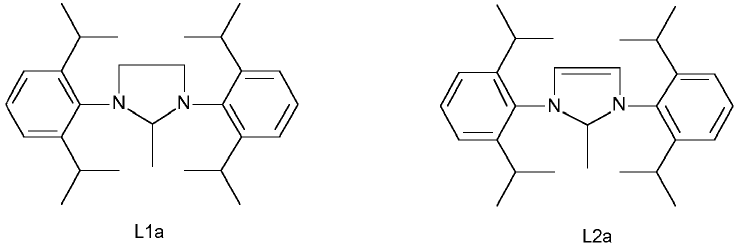 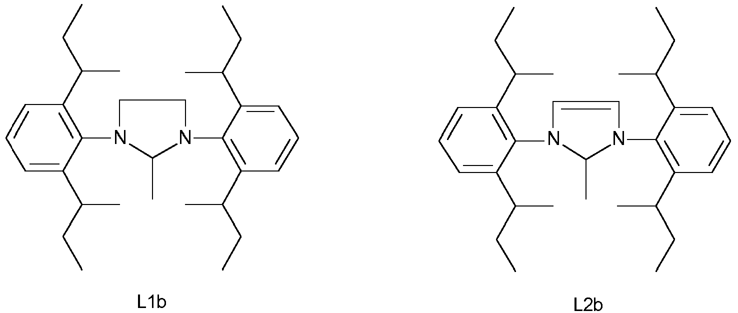 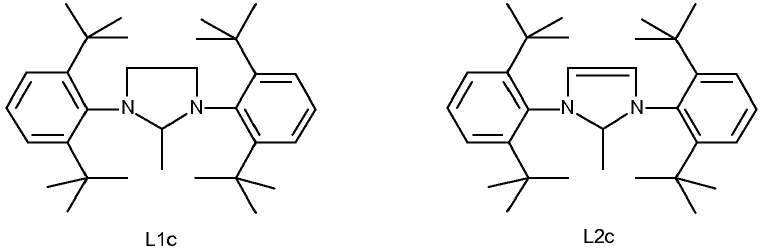 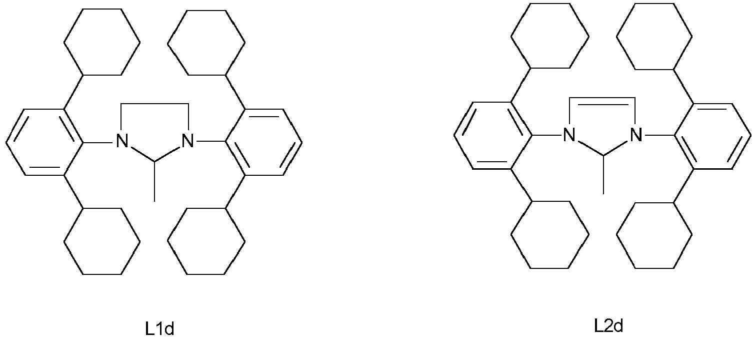 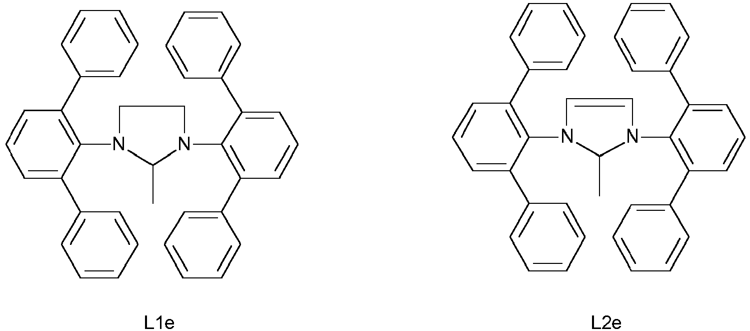 entspricht.

3. Verfahren zum Molekulargewichtabbau von Nitrilkautschuk nach Anspruch 1 oder 2,
**dadurch gekennzeichnet, dass** der NHC-Ligand der Formel L1a, L2a, L1b, L2b, L1c oder L2c, besonders bevorzugt L1a oder L2a entspricht.

4. Verfahren zum Molekulargewichtsabbau von Nitrilkautschuk nach einem der Ansprüche 1 bis 3, **dadurch gekennzeichnet, dass** der elektronenziehende Rest R³ -F, -Cl, -Br, -I, -NO, -NO₂, -CF₃, -OCF₃, -CN, -SCN, -NCO, -CNO, -COCH₃, -COCF₃, -CO-C₂F₅, -SO₃, - SO₂N(CH₃)₂, -NHCO-H, -NH-CO-CH₃, -NH-CO-CF₃, -NHCO-OEt, -NHCO-OiBu, -NH-CO-COOEt, -CO-NR₂, -NH-CO-C₆F₅ oder-NH(CO-CF₃)₂ sind.

5. Verfahren zum Molekulargewichtsabbau von Nitrilkautschuk nach einem der Ansprüche 1 bis 4, **dadurch gekennzeichnet, dass** der elektronenziehende Rest **R³**-Cl, -Br, -NO₂, -NH-CO-CF₃, -NH-CO-OiBu oder -NH-CO-COOEt, besonders bevorzugt -NH-CO-CF₃, -NH-CO-OiBu, NH-CO-COOEt ist.

6. Verfahren zum Molekulargewichtsabbau von Nitrilkautschuk nach einem der Ansprüche 1 bis 5, **dadurch gekennzeichnet, dass** die Ruthenium-Komplexkatalysatoren einer der folgenden Formeln entsprechen:

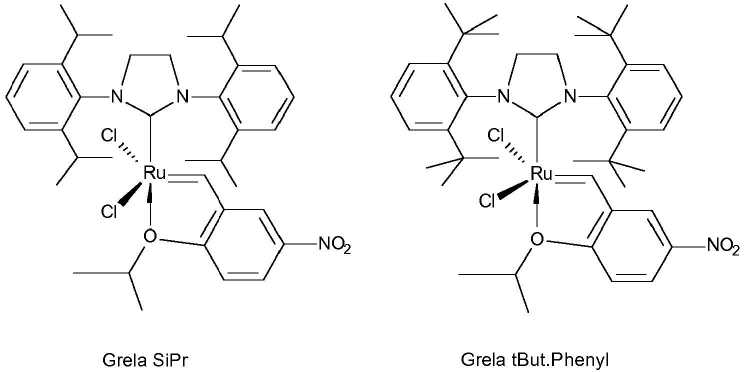

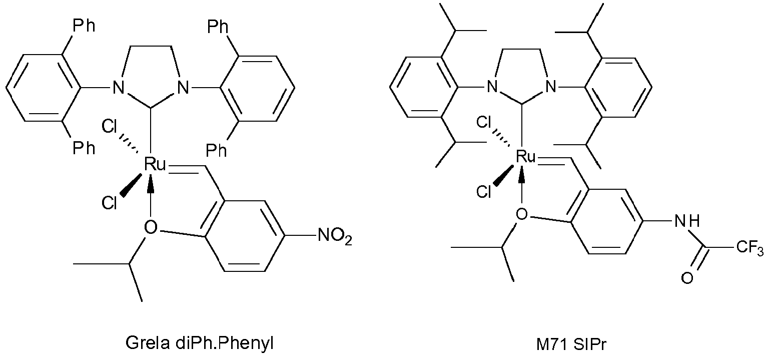

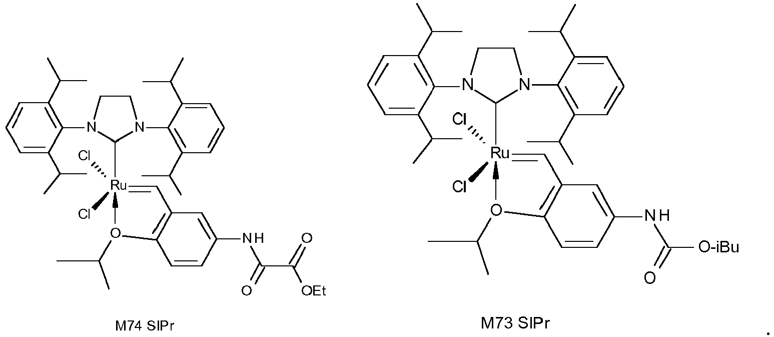

7. Verfahren zum Molekulargewichtsabbau von Nitrilkautschuk nach einem der Ansprüche 1 bis 6, **dadurch gekennzeichnet, dass** der Ruthenium-Komplexkatalysator M71 SIPr, M73 SIPr oder M74 SIPr, besonders bevorzugt **M73 SIPr** ist.

8. Verfahren zum Molekulargewichtsabbau von Nitrilkautschuk nach einem der Ansprüche 1 bis 7, wobei die verwendete **Katalysatormenge** 5 bis 1000 ppm Edelmetall, vorzugsweise 5 bis 500 ppm, insbesondere 5 bis 250 ppm, bezogen auf den verwendeten Nitrilkautschuk, beträgt.

9. Verfahren zum Molekulargewichtsabbau von Nitrilkautschuk nach einem der Ansprüche 1 bis 8, das in Gegenwart eines **Co-Olefins,** vorzugsweise eines geradkettigen oder verzweigten C₂-C₁₆-Olefins, besonders bevorzugt Ethylen, Propylen, Isobuten, Styrol, 1-Dodecen, 1-Hexen und 1-Octen, durchgeführt wird.

10. Verfahren zum Molekulargewichtsabbau von Nitrilkautschuk nach einem der Ansprüche 1 bis 9, wobei die **Konzentration** des Nitrilkautschuks in der Reaktionsmischung im Bereich von 1 Gew.-% bis 30 Gew.-%, vorzugsweise im Bereich von 5 Gew.-% bis 25 Gew.-%, bezogen auf die gesamte Reaktionsmischung, liegt.

11. Verfahren zum Molekulargewichtsabbau von Nitrilkautschuk nach einem der Ansprüche 1 bis 10, das bei einer **Temperatur** im Bereich von 10°C bis 150°C, vorzugsweise im Bereich von 20°C bis 100°C, durchgeführt wird.

12. Verfahren zum Molekulargewichtsabbau von Nitrilkautschuk nach einem der Ansprüche 1 bis 11, wobei ein oder mehrere **weitere copolymerisierbare Monomere** verwendet werden, vorzugsweise α,β-ungesättigte Mono- oder Dicarbonsäuren, deren Ester oder Amide, besonders bevorzugt Fumarsäure, Maleinsäure, Acrylsäure, Methacrylsäure, Methylacrylat, Ethylacrylat, Butylacrylat, Butylmethacrylat, 2-Ethylhexylacrylat, 2-Ethylhexylmethacrylat, Octylacrylat, Methoxyethyl(meth)acrylat, Ethoxyethyl(meth)acrylat und Methoxyethyl(meth)acrylat.

13. Verfahren zum Molekulargewichtsabbau von Nitrilkautschuk nach einem der Ansprüche 1 bis 12, bei dem auf die Metathesereaktion des Nitrilkautschuks eine **Hydrierungsreaktion** der ungesättigten C=C Doppelbindungen in dem Nitrilkautschuk folgt.

14. Verwendung eines Ruthenium-Komplexkatalysators der allgemeinen Formel (IA) in Metathese-Reaktionen zur Metathese von Nitrilkautschuk, bevorzugt in Ringschlussmetathesen (RCM), Kreuzmetathesen (CM) oder Ringöffnungsmetathesen (ROMP).

## Claims

1. Process for reducing the molecular weight of nitrile rubber, **characterized in that** the nitrile rubber is contacted, optionally in the presence of a co-olefin, and reacted with a ruthenium complex catalyst of the general formula (IA) 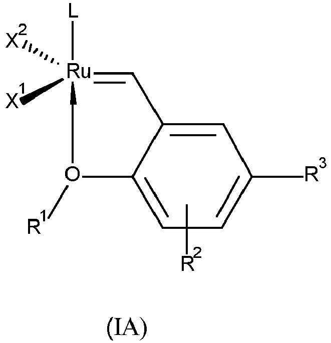 where
**X¹ and X²** represent identical or different anionic ligands, preferably halogen, more preferably F, Cl, Br, I and especially preferably Cl,
**R¹** represents a linear or branched, aliphatic C₁-C₂₀-alkyl, C₃-C₂₀-cycloalkyl, C₅-C₂₀-aryl, CHCH₃-CO-CH₃, preferably methyl, ethyl, isopropyl, isoamyl, t-butyl, CHCH₃-CO-CH₃, cyclohexyl or phenyl,
**R²** represents hydrogen, halogen, C₁-C₆-alkyl or C₁-C₆-alkenyl,
**R³** an electron-withdrawing radical, preferably -F, -Cl, -Br, -I, -NO, -NO₂, -CF₃, -OCF₃, -CN, -SCN, -NCO, -CNO, -COCH₃, -COCF₃, -CO-C₂F₅, -SO₃, -SO₂- N(CH₃)₂, arylsulfonyl, arylsulfinyl, arylcarbonyl, alkylcarbonyl, aryloxycarbonyl, or -NR⁴-CO-R⁵ where R⁴ and R⁵ are the same or different and may each independently be H, C₁-C₆-alkyl, perhalogenated C₁-C₆-alkyl, aldehyde, ketone, ester, amide, nitrile, optionally substituted aryl, pyridinium-alkyl, pyridinium-perhaloalkyl or optionally substituted C₅-C₆ cyclohexyl, a CₙH₂ₙY or CₙF₂ₙY radical with n = 1 to 6 and Y an ionic group or a radical of one of the formulae (EWG 1), (EWG 2) or (EWG 3) 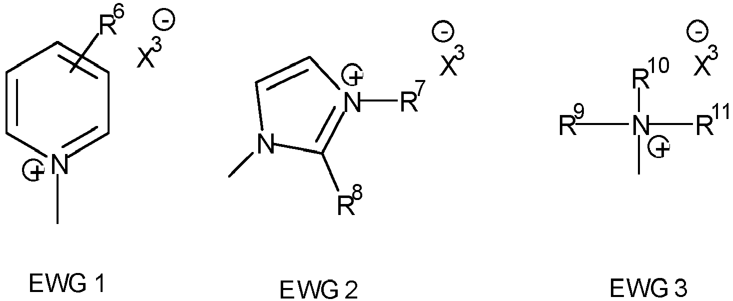
where
R⁶, R⁷, R⁸, R⁹, R¹⁰, R¹¹ independently represent H, C₁-C₆-alkyl, C₁-C₆-perhaloalkyl or C₅-C₆-aryl and R⁹, R¹⁰, R¹¹ may form a heterocycle,
X³ represents an anion, halogen, tetrafluoroborate [BF₄]⁻), [tetrakis-(3,5-bis(trifluoromethyl)phenyl)borate]([BARF]⁻), hexafluorophosphate ([PF₆]⁻), hexafluoroantimonate ([SbF₆]⁻), hexafluoroarsenate ([AsF₆]⁻) or trifluoromethylsulfonate ([(CF₃)₂N]⁻) ;
R⁴ and R⁵ together with the N and the C to which they are bonded may form a heterocycle of the formula (EWG 4) or (EWG 5) 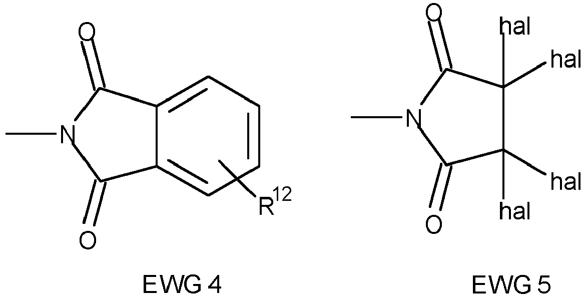
where
hal is halogen and
R¹² is hydrogen, C₁-C₆-alkyl, C₅-C₆-cycloalkyl or C₅-C₆-cycloaryl,
**L** represents an NHC ligand of the general formula (L1) or (L2) 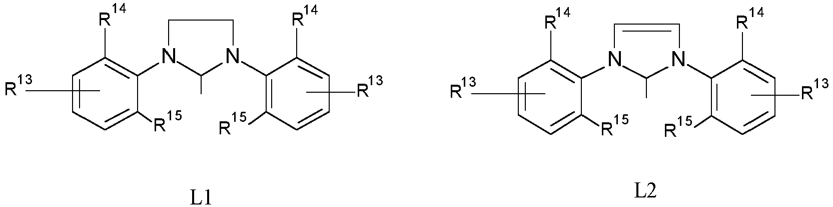
where
R¹³ is hydrogen, C₁-C₆-alkyl, C₃-C₃₀-cycloalkyl or C₅-C₃₀-aryl,
R¹⁴ and R¹⁵ are the same or different and are linear or branched C₃-C₃₀-alkyl, C₃-C₃₀-cycloalkyl, C₅-C₃₀-aryl, C₅-C₃₀-alkaryl, C₅-C₃₀-aralkyl, with optionally up to 3 heteroatoms, preferably isopropyl, i-butyl, tert-butyl, cyclohexyl or phenyl.

2. Process for reducing the molecular weight of nitrile rubber according to Claim 1, **characterized in that** L corresponds to an NHC ligand of the formulae L1a, L2a, L1b, L2b, L1c, L2c, L1d, L2d, L1e and L2e

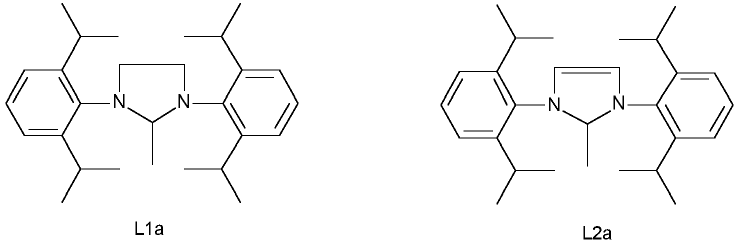

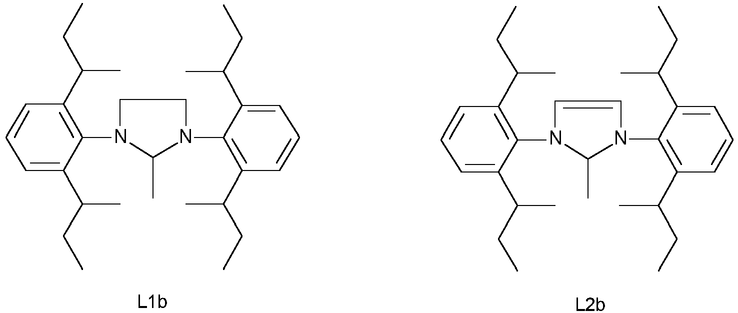

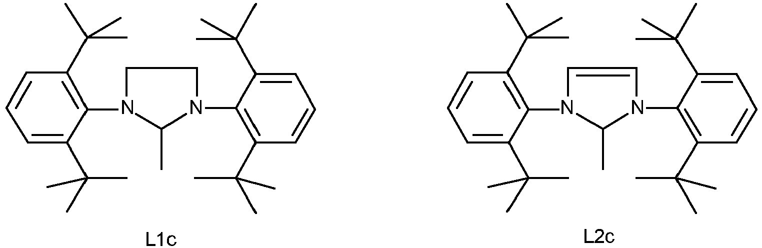

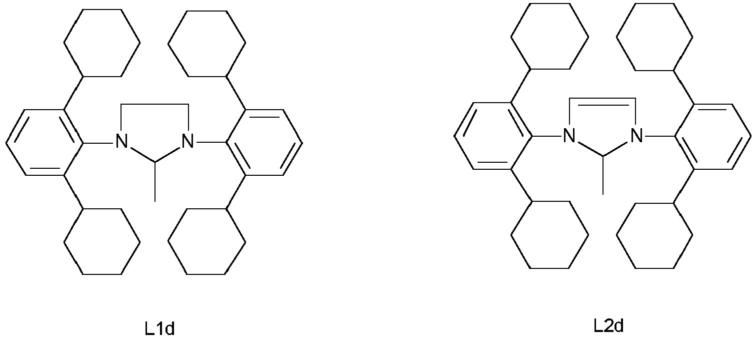

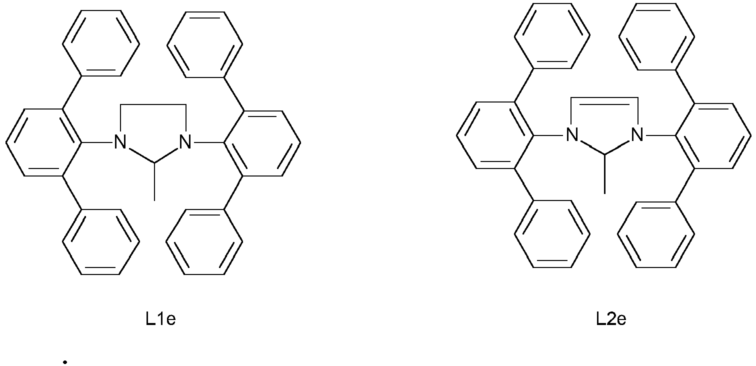

3. Process for reducing the molecular weight of nitrile rubber according to Claim 1 or 2, **characterized in that** the NHC ligand conforms to the formula L1a, L2a, L1b, L2b, L1c or L2c, more preferably L1a or L2a.

4. Process for reducing the molecular weight of nitrile rubber according to any of Claims 1 to 3, **characterized in that** the electron-withdrawing radical **R³** is -F, -Cl, -Br, -I, -NO, -NO₂, -CF₃, - OCF₃, -CN, -SCN, -NCO, -CNO, -COCH₃, -COCF₃, -CO-C₂F₅, -SO₃, -SO₂N(CH₃)₂, -NHCO-H, -NH-CO-CH₃, -NH-CO-CF₃, -NHCO-OEt, -NHCO-OiBu, -NH-CO-COOEt, -CO-NR₂, - NH-CO-C₆F₅ or -NH(CO-CF₃)₂.

5. Process for reducing the molecular weight of nitrile rubber according to any of Claims 1 to 4, **characterized in that** the electron-withdrawing radical **R³** is -Cl, -Br, -NO₂, -NH-CO-CF₃, -NH-CO-OiBu or -NH-CO-COOEt, more preferably -NH-CO-CF₃, -NH-CO-OiBu, NH-CO-COOEt.

6. Process for reducing the molecular weight of nitrile rubber according to any of Claims 1 to 5, **characterized in that** the ruthenium complex catalysts conform to one of the following formulae:

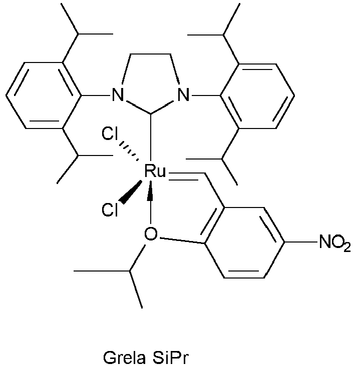

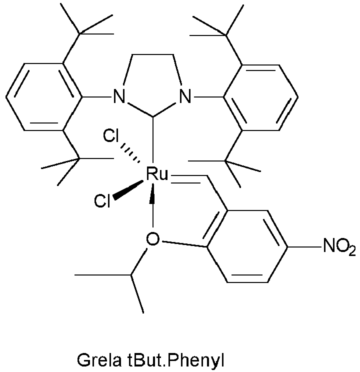

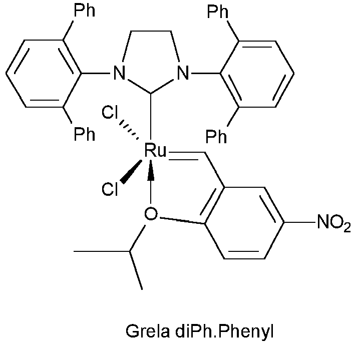

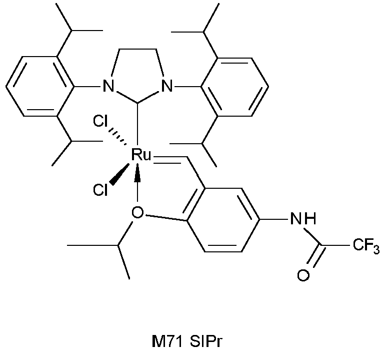

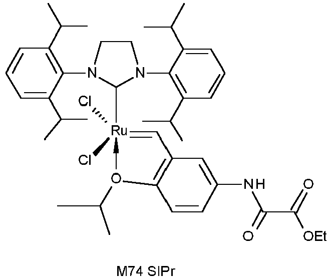

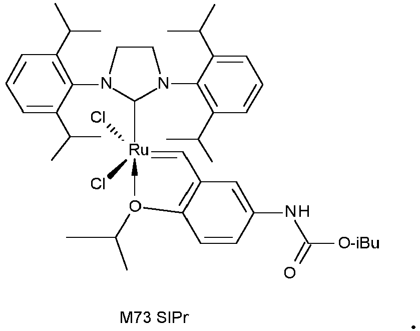

7. Process for reducing the molecular weight of nitrile rubber according to any of Claims 1 to 6, **characterized in that** the ruthenium complex catalyst is M71 SIPr, M73 SIPr or M74 SIPr, more preferably **M73 SIPr**.

8. Process for reducing the molecular weight of nitrile rubber according to any of Claims 1 to 7, wherein the **amount of catalyst** used is 5 to 1000 ppm of precious metal, preferably 5 to 500 ppm, especially 5 to 250 ppm, based on the nitrile rubber used.

9. Process for reducing the molecular weight of nitrile rubber according to any of Claims 1 to 8, which is conducted in the presence of a **co-olefin,** preferably of a straight-chain or branched C₂-C₁₆ olefin, more preferably ethylene, propylene, isobutene, styrene, 1-dodecene, 1-hexene and 1-octene.

10. Process for reducing the molecular weight of nitrile rubber according to any of Claims 1 to 9, wherein the **concentration** of the nitrile rubber in the reaction mixture is in the range from 1% by weight to 30% by weight, preferably in the range from 5% by weight to 25% by weight, based on the overall reaction mixture.

11. Process for reducing the molecular weight of nitrile rubber according to any of Claims 1 to 10, which is conducted at a **temperature** in the range from 10°C to 150°C, preferably in the range from 20°C to 100°C.

12. Process for reducing the molecular weight of nitrile rubber according to any of Claims 1 to 11, wherein one or more **further copolymerizable monomers** are used, preferably α,β-unsaturated mono- or dicarboxylic acids or esters or amides thereof, more preferably fumaric acid, maleic acid, acrylic acid, methacrylic acid, methyl acrylate, ethyl acrylate, butyl acrylate, butyl methacrylate, 2-ethylhexyl acrylate, 2-ethylhexyl methacrylate, octyl acrylate, methoxyethyl (meth)acrylate, ethoxyethyl (meth)acrylate and methoxyethyl (meth)acrylate.

13. Process for reducing the molecular weight of nitrile rubber according to any of Claims 1 to 12, in which the metathesis reaction of the nitrile rubber is followed by a **hydrogenation reaction** of the unsaturated C=C double bonds in the nitrile rubber.

14. Use of a ruthenium complex catalyst of the general formula (IA) in metathesis reactions for metathesis of nitrile rubber, preferably in ring-closing metatheses (RCM), cross-metatheses (CM) or ring-opening metatheses (ROMP).

## Revendications

1. Procédé pour la réduction du poids moléculaire de caoutchouc au nitrile, **caractérisé en ce que** le caoutchouc nitrile, éventuellement en présence d'une co-oléfine, est mis en contact et transformé avec un catalyseur de type complexe du ruthénium de formule générale (IA) 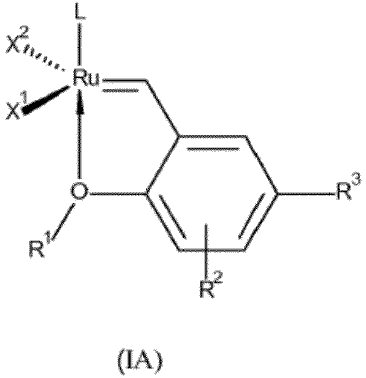
**X¹ et X²** représentant des ligands anioniques identiques ou différents, préférablement halogène, plus préférablement F, Cl, Br, I et particulièrement préférablement Cl,
**R¹** représentant un C₁-C₂₀-alkyle aliphatique, linéaire ou ramifié, C₃-C₂₀-cycloalkyle, C₅-C₂₀-aryle, CHCH₃-CO-CH₃, préférablement méthyle, éthyle, isopropyle, isoamyle, t-butyle, CHCH₃-CO-CH₃, cyclohexyle ou phényle,
**R²** représentant hydrogène, halogène, C₁-C₆-alkyle ou C₁-C₆-alcényle,
**R³** un radical électroattracteur, préférablement -F, -Cl, -Br, -I, -NO, -NO₂, -CF₃, -OCF₃, -CN, -SCN, -NCO, -CNO, -COCH₃, -COCF₃, -CO-C₂F₅, -SO₃, -SO₂-N(CH₃)₂, arylsulfonyle, arylsulfinyle, arylcarbonyle, alkylcarbonyle, aryloxycarbonyle, ou -NR⁴-CO-R⁵, R⁴ et R⁵ étant identiques ou différents et pouvant représenter à chaque fois indépendamment l'un de l'autre H, C₁-C₆-alkyle, C₁-C₆-alkyle perhalogéné, aldéhyde, cétone, ester, amide, nitrile, aryle éventuellement substitué, pyridinium-alkyle, pyridinium-perhalogénoalkyle ou C₅-C₆-cyclohexyle éventuellement substitué, un radical CₙH₂ₙY ou CₙF₂ₙY avec n = 1 à 6 et Y un groupe ionique ou un radical d'une des formules (EWG 1), (EWG 2) ou (EWG 3) 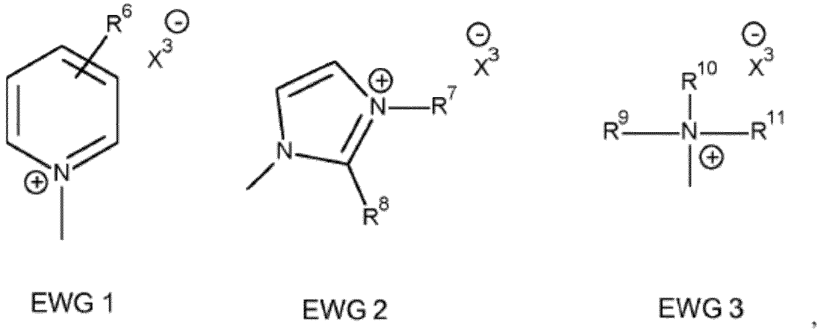
R⁶, R⁷, R⁸, R⁹, R¹⁰, R¹¹ représentant indépendamment les uns des autres H, C₁-C₆-alkyle, C₁-C₆-perhalogénoalkyle ou C₅-C₆-aryle et R⁹, R¹⁰, R¹¹ pouvant former un hétérocycle,
X³ représentant un anion, halogène, tétrafluoroborate ([BF₄]⁻), [tétrakis-(3,5-bis-(trifluorométhyl)-phényl)borate]([BARF]⁻), hexafluorophosphate ([PF₆]⁻), hexafluoroantimonate ([SbF₆]⁻), hexafluoroarséniate ([AsF₆]⁻) ou trifluorométhylsulfonate ([(CF₃)₂N]⁻) ;
R⁴ et R⁵ pouvant former, avec le N et le C auquel ils sont liés, un hétérocycle de formule (EWG 4) ou (EWG 5) 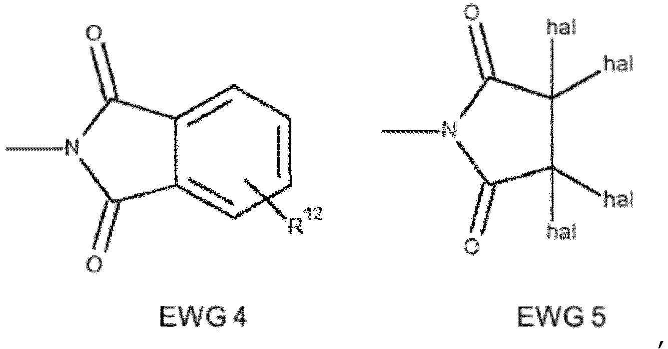 hal représentant halogène
R¹² représentant hydrogène, C₁-C₆-alkyle, C₅-C₆-cycloalkyle ou C₅-C₆-cycloaryle,
L représentant un ligand NHC de formule générale (Ll) ou (L2) 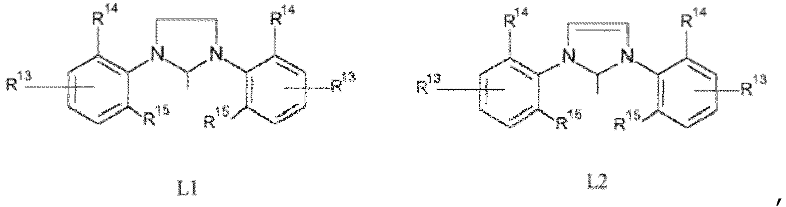
R¹³ représentant hydrogène, C₁-C₆-alkyle, C₃-C₃₀-cycloalkyle ou C₅-C₃₀-aryle,
R¹⁴ et R¹⁵ étant identiques ou différents et représentant C₃-C₃₀-alkyle linéaire ou ramifié, C₃-C₃₀-cycloalkyle, C₅-C₃₀-aryle, C₅-C₃₀-alkaryle, C₅-C₃₀-aralkyle, comportant éventuellement jusqu'à 3 hétéroatomes, représentant préférablement isopropyle, i-butyle, tert-butyle, cyclohexyle ou phényle.

2. Procédé pour la réduction du poids moléculaire de caoutchouc au nitrile selon la revendication 1, **caractérisé en ce que** L correspond à un ligand NHC parmi les formules L1a, L2a, L1b, L2b, L1c, L2c, Lld, L2d, L1e et L2e

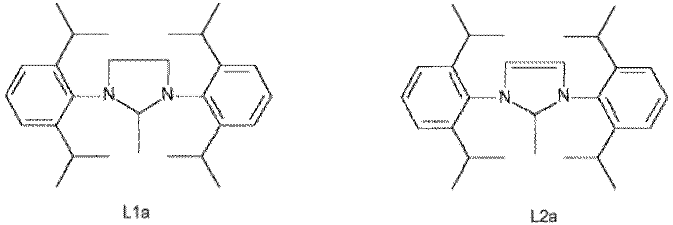

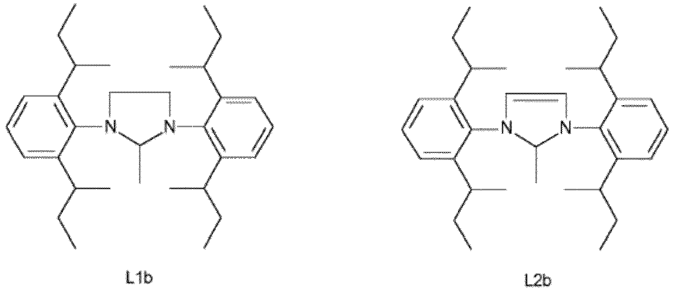

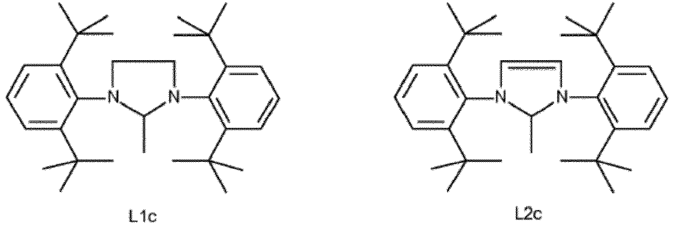

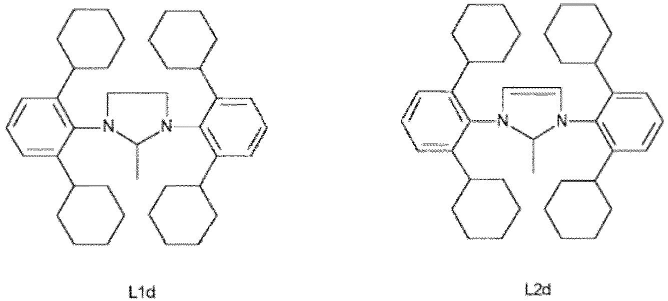

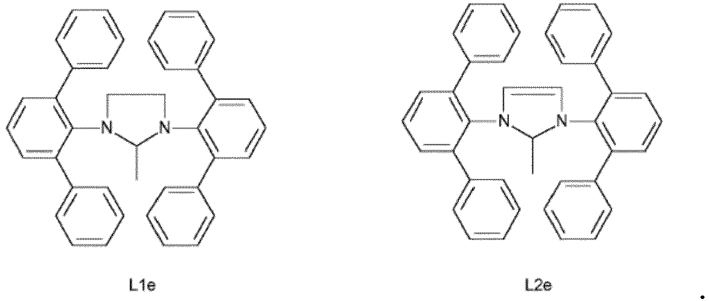

3. Procédé pour la réduction du poids moléculaire de caoutchouc au nitrile selon la revendication 1 ou 2, **caractérisé en ce que** le ligand NHC correspond à la formule L1a, L2a, L1b, L2b, L1c ou L2c, particulièrement préférablement L1a ou L2a.

4. Procédé pour la réduction du poids moléculaire de caoutchouc au nitrile selon l'une quelconque des revendications 1 à 3, **caractérisé en ce que** le radical électroattracteur **R³** est -F, -Cl, -Br, -I, -NO, -NO₂, -CF₃, -OCF₃, -CN, -SCN, -NCO, -CNO, - COCH₃, -COCF₃, -CO-C₂F₅, -SO₃, -SO₂N (CH₃)₂, -NHCO-H, - NH-CO-CH₃, -NH-CO-CF₃, -NHCO-OEt, -NHCO-OiBu, -NH-CO-COOEt, -CO-NR₂, -NH-CO-C₆F₅ ou -NH(CO-CF₃)₂.

5. Procédé pour la réduction du poids moléculaire de caoutchouc au nitrile selon l'une quelconque des revendications 1 à 4, **caractérisé en ce que** le radical électroattracteur **R³** est -Cl, -Br, -NO₂, - NH-CO-CF₃, -NH-CO-OiBu ou -NH-CO-COOEt, particulièrement préférablement -NH-CO-CF₃, -NH-CO-OiBu, -NH-CO-COOEt.

6. Procédé pour la réduction du poids moléculaire de caoutchouc au nitrile selon l'une quelconque des revendications 1 à 5, **caractérisé en ce que** les catalyseurs de type complexe du ruthénium correspondent à l'une des formules suivantes :

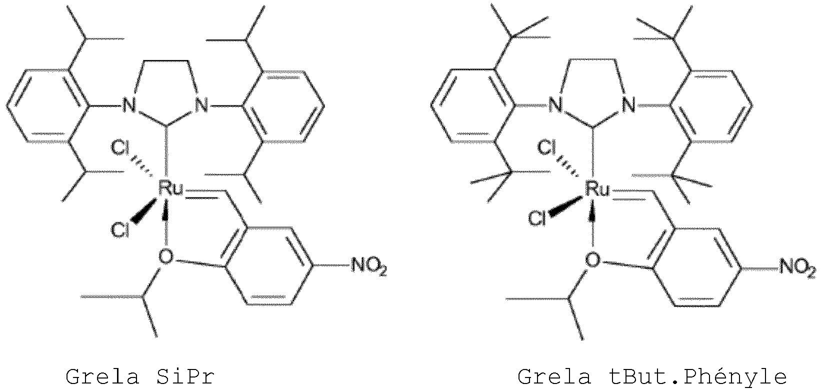

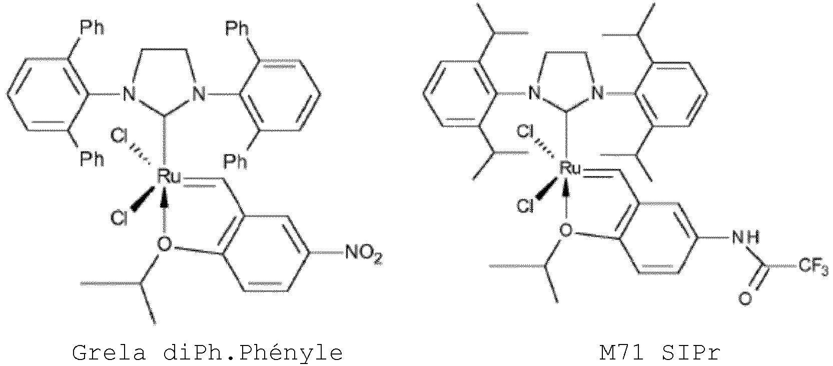

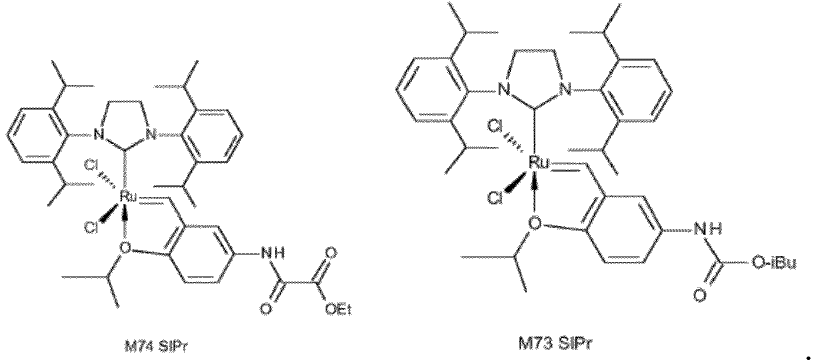

7. Procédé pour la réduction du poids moléculaire de caoutchouc au nitrile selon l'une quelconque des revendications 1 à 6, **caractérisé en ce que** le catalyseur de type complexe du ruthénium est M71 SIPr, M73 SIPr ou M74 SIPr, particulièrement préférablement **M73 SIPr.**

8. Procédé pour la réduction du poids moléculaire de caoutchouc au nitrile selon l'une quelconque des revendications 1 à 7, la **quantité de catalyseur** utilisé étant de 5 à 1 000 ppm de métal noble, de préférence 5 à 500 ppm, en particulier 5 à 250 ppm, par rapport au caoutchouc de nitrile utilisé.

9. Procédé pour la réduction du poids moléculaire de caoutchouc au nitrile selon l'une quelconque des revendications 1 à 8, qui est réalisé en présence d'une **co-oléfine,** de préférence d'une C₂-C₁₆-oléfine linéaire ou ramifiée, particulièrement préférablement l'éthylène, le propylène, l'isobutène, le styrène, le 1-dodécène, le 1-hexène et le 1-octène.

10. Procédé pour la réduction du poids moléculaire de caoutchouc au nitrile selon l'une quelconque des revendications 1 à 9, la **concentration** du caoutchouc au nitrile dans le mélange réactionnel se situant dans la plage de 1 % en poids à 30 % en poids, de préférence dans la plage de 5 % en poids à 25 % en poids, par rapport au mélange de réaction total.

11. Procédé pour la réduction du poids moléculaire de caoutchouc au nitrile selon l'une quelconque des revendications 1 à 10, qui est réalisé à une **température** dans la plage de 10 °C à 150 °C, de préférence dans la plage de 20 °C à 100 °C.

12. Procédé pour la réduction du poids moléculaire de caoutchouc au nitrile selon l'une quelconque des revendications 1 à 11, un ou plusieurs **autres monomères copolymérisables** étant utilisés, de préférence des acides monocarboxyliques ou dicarboxyliques, α,β-insaturés, leurs esters ou amides, particulièrement préférablement l'acide fumarique, l'acide maléique, l'acide acrylique, l'acide méthacrylique, l'acrylate de méthyle, l'acrylate d'éthyle, l'acrylate de butyle, le méthacrylate de butyle, l'acrylate de 2-éthylhexyle, le méthacrylate de 2-éthylhexyle, l'acrylate d'octyle, un (méth)acrylate de méthoxyéthyle, un (méth)acrylate d'éthoxyéthyle et un (méth)acrylate de méthoxyéthyle.

13. Procédé pour la réduction du poids moléculaire de caoutchouc au nitrile selon l'une quelconque des revendications 1 à 12, dans lequel une **réaction d'hydrogénation** des doubles liaisons C=C insaturées dans le caoutchouc au nitrile suit la réaction de métathèse du caoutchouc au nitrile.

14. Utilisation d'un catalyseur de type complexe du ruthénium de formule générale (IA) dans des réactions de métathèse pour la métathèse de caoutchouc au nitrile, préférablement dans des métathèses avec fermeture de cycle (RCM), des métathèses croisées (CM) ou des métathèses avec ouverture de cycle (ROMP).
